# EUROPÄISCHE PATENTSCHRIFT

(11) **EP 3 810 469 B1**
(45) Veröffentlichungstag und Bekanntmachung des Hinweises auf die Patenterteilung: **06.04.2022**
(21) Anmeldenummer: 19736996.0
(22) Anmeldetag: 18.06.2019
(51) Int. Cl.: B60T 13/68

(54) **PARKBREMSEINRICHTUNG FÜR EIN KRAFTFAHRZEUG**
PARKING BRAKE ARRANGEMENT FOR VEHICLE
DISPOSITIF DE FREIN DE STATIONNEMENT POUR VÉHICULE

(30) Priorität: 19.06.2018 DE 102018114639
(43) Veröffentlichungstag der Anmeldung: 28.04.2021
(73) Patentinhaber: KNORR-BREMSE Systeme für Nutzfahrzeuge GmbH, 80809 München (DE)
(72) Erfinder: SCHNITTGER, Karsten, 80935 München (DE); GRIESSER, Fabian, 80803 München (DE)
(86) Internationale Anmeldenummer: PCT/EP2019/065938
(87) Internationale Veröffentlichungsnummer: WO 2019/243285

(56) Entgegenhaltungen:
- WO-A1-2017/060128
- DE-A1-102006 041 011
- DE-A1-102008 048 207
- GB-A- 2 270 130
- US-A1- 2005 137 767

## Beschreibung

Die vorliegende Erfindung betrifft eine Parkbremseinrichtung für ein Kraftfahrzeug, insbesondere Nutzfahrzeug, mit wenigstens einen Druckluftanschluss, mit wenigstens einer ersten Steuer-Magnetventileinheit, mit wenigstens einem Anhängersteuer-Bistabilventil und mit wenigstens einem ersten Druckluftausgang.

Parkbremsen (auch Feststellbremsen genannt) von Nutzfahrzeugen einschließlich Anhängern sowie Schienenfahrzeugen sind heute regelmäßig mit Federspeicherbremszylindern ausgestattet, die in Lösestellung einen Federkompressionsraum mit Druckluft beaufschlagen und dadurch die Feder gespannt halten, während zum Parkbremsen der Federkompressionsraum entlüftet, d. h. mit Atmosphärendruck verbunden wird, so dass der Bremszylinder unter Wirkung der Feder eine Bremskraft erzeugt (vgl. Bosch, Kraftfahrtechnisches Taschenbuch, 22. Auflage, Düsseldorf, 1995, S. 648).

Aus der WO 2015/154 787 A1 ist bereits eine elektronische Parkbremse bekannt, die ein Relaisventil nutzt, dessen Kolben als Stufenkolben ausgeführt ist und eine Rückkopplung des Relaisventilausgangs zum Steuerraum des Relaisventils aufweist. In den Rückkopplungspfad ist eine Drosseleinheit vorgesehen. Jedoch tritt insbesondere beim Entlüften der Vorrichtung anhand der Rückkopplung mit der Drosseleinheit ein Druckluftverlust auf. Es wird eine Nachregelung notwendig, wobei Magnetventile zur Belüftung und Entlüftung entsprechend geschaltet werden müssen. Die DE 102006041011 A1 beschreibt eine elektropneumatische Bremssteuerungseinrichtung zur Steuerung einer Feststellbremse eines Fahrzeugs.

Es ist daher die Aufgabe der vorliegenden Erfindung, eine Parkbremseinrichtung der eingangs genannten Art in vorteilhafter Weise weiter zu bilden, insbesondere dahingehend, dass eine Parkbremseinrichtung vergleichsweise einfach aufgebaut sein kann und auf vergleichsweise kontrollierte Weise belüftet und entlüftet werden kann.

Diese Aufgabe wird erfindungsgemäß gelöst durch eine Parkbremseinrichtung für Kraftfahrzeuge mit den Merkmalen des Anspruchs 1. Danach ist eine Parkbremseinrichtung für ein Kraftfahrzeug, insbesondere ein Nutzfahrzeug, mit wenigstens einen Druckluftanschluss, mit wenigstens einer ersten Steuer-Magnetventileinheit, mit wenigstens einem Anhängersteuer-Bistabilventil und mit wenigstens einem ersten Druckluftausgang versehen, wobei der Druckluftanschluss mit der ersten Steuer-Magnetventileinheit und dem Anhängersteuer-Bistabilventil verbindbar ist, wobei die erste Steuer-Magnetventileinheit mit dem Anhängersteuer-Bistabilventil über wenigstens eine erste Steuerleitung verbindbar ist, und wobei das Anhängersteuer-Bistabilventil über wenigstens eine Anhängersteuer-Ausgangsleitung mit dem ersten Druckluftausgang verbindbar ist, wobei Parkbremseinrichtung wenigstens ein Zugfahrzeugsteuer-Bistabilventil und wenigstens einen zweiten Druckluftausgang aufweist, wobei der Druckluftanschluss mit dem Zugfahrzeugsteuer-Bistabilventil verbindbar ist und wobei das Zugfahrzeugsteuer-Bistabilventil über wenigstens eine Zugfahrzeugsteuer-Ausgangsleitung mit dem zweiten Druckluftausgang verbindbar ist, wobei in der Zugfahrzeugsteuer-Ausgangsleitung zwischen dem Zugfahrzeugsteuer-Bistabilventil und dem zweiten Druckluftausgang wenigstens eine Zugfahrzeug-Ausgangs-Abzweigung angeordnet ist und wobei die erste Steuer-Magnetventileinheit über wenigstens eine Bypasssteuerleitung sowie über die Zugfahrzeug-Ausgangs-Abzweigung mit der Zugfahrzeugsteuer-Ausgangsleitung verbindbar ist.

Die Erfindung basiert auf dem Grundgedanken, dass die Zugfahrzeugsteuer-Ausgangsleitung und die Anhängersteuer-Ausgangsleitung über die Bypasssteuerleitung und die erste Steuer-Magnetventileinheit miteinander verbindbar sind.

Durch diese Art der Verbindung, welche mittels der ersten Steuer-Magnetventileinheit herstellbar und trennbar ist, kann der Steuerdruck der Zugfahrzeugsteuer-Ausgangsleitung ebenfalls an die Anhängersteuer-Ausgangsleitung übertragen werden. Der gleiche Betriebsdruck bzw. Steuerdruck in diesen beiden Ausgangsleitungen eignet sich besonders vorteilhaft für den Betrieb der Parkbremseinrichtung z.B. bezüglich einer gestuften Abbremsung eines Zugfahrzeugs und eines Anhängers. Sobald eine gestufte Abbremsung durchgeführt werden soll, schaltet die erste Steuer-Magnetventileinheit in eine Durchlassstellung, so dass die beiden Ausgangsleitungen verbunden sind. Somit kann ein geregelter und somit abstufbarer Betriebsdruck ausgehend von der Zugfahrzeugsteuer-Ausgangsleitung ebenfalls an die Anhängersteuer-Ausgangsleitung übertragen bzw. eingesteuert werden. Folglich kann der Steuerdruck für beide vorstehend beschriebenen Ausgangsleitungen mit lediglich einer Steuer-Magnetventileinheit gesteuert bzw. geregelt werden, was zu einer Vereinfachung der erfindungsgemäßen Parkbremseinrichtung hinsichtlich Bauraum, Gewicht, Herstellung, Montage usw. führt.

Folglich kann vorgesehen sein, dass die Bypasssteuerleitung stromabwärts des Zugfahrzeugsteuer-Bistabilventils an die Zugfahrzeugsteuer-Ausgangsleitung angeschlossen ist. Ein derartiger Anschluss der Bypasssteuerleitung an die Zugfahrzeugsteuer-Ausgangsleitung stromabwärts des Zugfahrzeugsteuer-Bistabilventils ist insbesondere auf einen wenigstens teilweise belüfteten bzw. bedruckten Zustand des Zugfahrzeugsteuer-Bistabilventils und der Zugfahrzeugsteuer-Ausgangsleitung bezogen. Mit anderen Worten ist dieser Anschluss der Bypasssteuerleitung stromabwärts des Zugfahrzeugsteuer-Bistabilventils in die Zugfahrzeugsteuer-Ausgangsleitung nicht auf einen wenigstens teilweise entlüfteten Zustand des Zugfahrzeugsteuer-Bistabilventils und der Zugfahrzeugsteuer-Ausgangsleitung bezogen.

Dabei ist ferner vorstellbar, dass die vorstehend genannte Parkbremseinrichtung eine erste und eine zweite Parkbremseinheit aufweisen kann. Insbesondere kann die erste Parkbremseinheit der Parkbremseinrichtung für einen Anhänger bzw. Trailer eines Kraftfahrzeuges vorgesehen sein, wobei die zweite Parkbremseinheit für ein Zugfahrzeug vorgesehen sein kann.

Ferner ist die erste Steuerleitung über wenigstens eine erste Rückkopplungsleitung mit der Anhängersteuer-Ausgangsleitung verbunden, so dass die Anhängersteuer-Ausgangsleitung ferner über die erste Steuerleitung und die erste Rückkopplungsleitung mit der Zugfahrzeugsteuer-Ausgangsleitung verbindbar ist.

Nach einer erfindungsgemäßen Ausführungsform ist ferner in der ersten Steuerleitung zwischen dem Anhängersteuer-Bistabilventil und der ersten Steuer-Magnetventileinheit wenigstens eine erste Steuer-Abzweigung angeordnet und in der Anhängersteuer-Ausgangsleitung zwischen dem Anhängersteuer-Bistabilventil und dem ersten Druckluftausgang ist wenigstens eine Anhänger-Ausgangs-Abzweigung angeordnet, wobei die erste Steuerleitung an der ersten Steuer-Abzweigung über wenigstens eine erste Rückkopplungsleitung an der Anhänger-Ausgangs-Abzweigung mit der Anhängersteuer-Ausgangsleitung verbunden ist.

Diese Art der pneumatischen Verschaltung ermöglicht insbesondere einen vereinfachten Aufbau des Anhängersteuer-Bistabilventils, da es mittels der Rückkopplungsleitung und den entsprechenden Abzweigungen überbrückt werden kann, wenn die beiden vorstehend beschriebenen Ausgangsleitungen miteinander verbunden werden sollen. Hierdurch kann der Betriebsdruck der Anhängersteuer-Ausgangsleitung direkt und ohne Zwischenschaltung des Anhängersteuer-Bistabilventils an die erste Steuerleitung übertragen werden, von wo dieser Druck ferner mittels der ersten Steuer-Magnetventileinheit und der Bypasssteuerleitung an die Zugfahrzeugsteuer-Ausgangsleitung übertragbar ist.

Anhand elektromagnetisch schaltbarer, federbelasteter Steuer-Ventile bzw. Ventileinheiten kann ein stromloser Schaltzustand stets sichergestellt werden, insbesondere sobald ein in gezielter Form (z.B. durch elektromagnetisches Schalten) herbeigeführter Schaltzustand beendet wird.

Das Anhängersteuer-Bistabilventil weist vorzugsweise einen Eingang, einen Ausgang bzw. Arbeitsausgang, einen Steuereingang und einen Entlüftungsausgang auf. Die erste Steuerleitung ist über den Steuereingang mit dem Anhängersteuer-Bistabilventil verbunden. Die Druckluftquelle ist ferner mit dem Eingang des Anhängersteuer-Bistabilventils verbunden. Der Ausgang bzw. Arbeitsausgang des Anhängersteuer-Bistabilventils ist über die Anhängersteuer-Ausgangsleitung bevorzugter Weise mit wenigstens einem Steuereingang wenigstens eines aus dem Stand der Technik bekannten Anhängersteuerventils verbunden oder verbindbar.

Indem an dem Steuereingang des Anhängersteuer-Bistabilventils ein spezifischer Druck angelegt wird, ist eine Verbindung zwischen dem Eingang und dem Ausgang bzw. Arbeitsausgang des Anhängersteuer-Bistabilventils herstellbar und steuerbar.

Dieser spezifische Druck muss einem Schwelldruck gleich oder größer sein, um eine Verbindung zwischen Eingang und Ausgang des Anhängersteuer-Bistabilventils bereitstellen zu können. Bei Erreichen des Schwelldrucks wird der Entlüftungsausgang des Anhängersteuer-Bistabilventils geschlossen.

Anhand von Luftdrücken bzw. Fluiddrücken, die wenigstens gleich oder größer als der vorbestimmbare Schwelldruck sind, ist eine Druckluftverbindung zwischen dem Eingang und dem Ausgang des Anhängersteuer-Bistabilventils bedarfsweise steuerbar. Auf diese Weise ist vorteilhaft ein spezifischer Druck am Ausgang bzw. Arbeitsausgang des Anhängersteuer-Bistabilventils erzielbar.

Ferner kann vorgesehen sein, dass in der Anhängersteuer-Ausgangsleitung wenigstens eine erste Drosseleinheit angeordnet ist, insbesondere wobei die erste Drosseleinheit zwischen dem Anhängersteuer-Bistabilventil und der Anhänger-Ausgangs-Abzweigung anordenbar ist und/oder wobei die erste Drosseleinheit in der ersten Rückkopplungsleitung anordenbar ist.

Mittels einer derartigen ersten Drosseleinheit und ihrer entsprechenden Anordnung zwischen Anhängersteuer-Bistabilventil und Anhänger-Ausgangs-Abzweigung kann das verhältnismäßig kleine Volumen der Anhängersteuer-Ausgangsleitung schnell, sicher und effizient belüftet werden.

Erfindungsgemäß ist ferner denkbar, dass die erste Drosseleinheit in der ersten Rückkopplungsleitung zwischen der Anhänger-Ausgangs-Abzweigung der Anhängersteuer-Ausgangsleitung und der ersten Steuer-Abzweigung der ersten Steuerleitung angeordnet ist.

Mittels der Anordnung der ersten Drosseleinheit in der ersten Rückkopplungsleitung ist insbesondere ein Luftverlust im Zuge eines Schaltvorgangs zwischen verschiedenen Betriebsmodi eines Kraftfahrzeuges mit der erfindungsgemäßen Parkbremseinrichtung vermeidbar bzw. verringerbar. Ein Schaltvorgang zwischen den Betriebszuständen kann schneller, effizienter und präziser erfolgen. Insbesondere ist durch das Unterbinden bzw. das Einschränken eines Luftverlustes keine Nachregelung von Druckluft notwendig.

Als Betriebsmodi der Parkbremseinrichtung für das Kraftfahrzeug können ein Fahrzustand, wenigstens ein Parkzustand, ein abstufbarer Bremszustand oder ein Trailer-Test-Zustand vorgesehen sein.

Für den abstufbaren Bremszustand kann ein bedarfsweiser, konstanter Druck an dem Ausgang des Anhängersteuer-Bistabilventils einstellbar sein, um eine beliebige Bremswirkung zu erzielen.

Unter einem konstanten Druck kann im Sinne der vorliegenden Erfindung insbesondere auch ein Druckbereich mit einem steuer- bzw. regelbaren, vorzugsweise vorgebbaren, Maximaldruck und Minimaldruck verstanden werden.

Insbesondere kann der Druck zwischen 0 bar und dem maximalen Systemdruck liegen.

Ein konstanter Druck bzw. Druckbereich kann im Sinne der vorliegenden Erfindung insbesondere zeitweise eingestellt bzw. gehalten werden.

Am Ausgang des Anhängersteuer-Bistabilventils ist ein Druck bereitstellbar, der vorzugsweise proportional zu dem Druck am Steuereingang des Anhängersteuer-Bistabilventils ist.

Alternativ kann darüber hinaus ein Streckbrems-Zustand anhand der erfindungsgemäßen Parkbremseinrichtung vorgesehen sein. So kann durch ein vorzugsweise abstufbares Einbremsen des Anhängers das Kraftfahrzeug (ausgestattet mit z.B. einem Zugfahrzeug und einem Anhänger) gestreckt werden und ist auf diese Weise stabilisierbar.

Vorzugsweise ist in diesem Sinne eine Parkbremse und eine Betriebsbremse des Zugfahrzeugs im Streckbrems-Zustand gelöst, wobei eine Parkbremse und/oder Betriebsbremse, bevorzugter Weise wenigstens ein Federspeicherbremszylinder und/oder Betriebsbremszylinder, des Anhängers aktiviert ist, insbesondere abstufbar aktivierbar ist.

In diesem Sinne ist unter einem Kraftfahrzeug, insbesondere einem Nutzfahrzeug, vorzugsweise ein Zugfahrzeug mit wenigstens einem Anhänger zu verstehen.

Die Umschaltung zwischen z.B. einem Fahrzustand, einem Parkzustand oder einem abstufbaren Bremszustand ist insbesondere anhand der erfindungsgemäßen Parkbremsvorrichtung schneller und kontrollierter durchführbar.

Zusätzlich ist vorstellbar, dass die erste Steuer-Magnetventileinheit wenigstens ein erstes Steuer-Magnetventil und wenigstens ein zweites Steuer-Magnetventil aufweist, insbesondere wobei in einer Verbindungsleitung zwischen erstem und zweitem Steuer-Magnetventil wenigstens ein Drucksensor angeordnet ist.

In diesem Zusammenhang ist ferner denkbar, dass die erste Steuer-Magnetventileinheit derart ausgestaltet ist, dass zwischen dem Druckluftanschluss und der ersten Steuerleitung das erste Steuer-Magnetventil und zwischen der ersten Steuerleitung und der Bypasssteuerleitung das zweite Steuer-Magnetventil angeordnet ist.

Die erste Steuerleitung verbindet somit das Anhängersteuer-Bistabilventil mit dem vorzugsweise eigenständigen ersten Steuer-Magnetventil sowie mit dem eigenständigen zweiten Steuer-Magnetventil innerhalb der ersten Steuer-Magnetventileinheit. Dazu ist die erste Steuerleitung an einer weiteren Steuer-Abzweigung vorzugsweise mit einer Verbindungsleitung verbunden, die das erste und zweite Steuer-Magnetventil miteinander verbindet.

So kann mittels des ersten Steuer-Magnetventils eine gezielte Belüftung und Entlüftung des Steuereingangs des Anhängersteuer-Bistabilventils erzielt werden. Ferner kann mittels des zweiten Steuer-Magnetventils eine gezielte Belüftung und Entlüftung der Anhängersteuer-Ausgangsleitung bereitgestellt werden.

Alternativ kann vorgesehen sein, dass die erste Steuer-Magnetventileinheit als eine kombinierte Magnetventileinheit umfassend das erste Steuer-Magnetventil und das zweite Steuer-Magnetventil mit einem Bypasssteueranschluss zur Verbindung mit der Bypasssteuerleitung ausgestaltet ist.

Außerdem ist denkbar, dass die erste Rückkopplungsleitung in Verbindung mit der ersten Steuer-Abzweigung und der Anhänger-Ausgangs-Abzweigung eine Rückkopplungsverbindung zwischen einem ersten Steuereingang und einem ersten Ausgang des Anhängersteuer-Bistabilventils ausbildet.

So kann ein Druck von dem Ausgang bzw. Arbeitsausgang des Anhängersteuer-Bistabilventils bedarfsweise zur Steuerung dessen eigenen Steuereingangs einsetzbar sein.

Insbesondere kann eine Verbindung zwischen dem Eingang und dem Ausgang des Bistabilventils erhalten werden, indem der Druck an dem Ausgang des Bistabilventils zu dem Steuereingang des Bistabilventils rückkoppelbar ist. Im Übrigen ermöglicht die Rückkopplung des Betriebsdrucks am Ausgang des Anhängersteuer-Bistabilventils an seinen eigenen Steuereingang eine verkürzte Schaltdauer bzw. Bestromungsdauer der ersten Steuer-Magnetventileinheit, da nach Erreichen eines hinreichend großen Schwellsteuerdruckes an dem Steuereingang des Anhängersteuer-Bistabilventils die erste Steuer-Magnetventileinheit wieder in den stromlosen Zustand überführbar ist.

Die Parkbremseinrichtung kann ferner wenigstens eine zweite Steuer-Magnetventileinheit aufweisen, die mit dem Druckluftanschluss und dem Zugfahrzeugsteuer-Bistabilventil verbindbar ist, wobei die zweite Steuer-Magnetventileinheit mit dem Zugfahrzeugsteuer-Bistabilventil über wenigstens eine zweite Steuerleitung verbindbar ist.

Diese Art der pneumatischen Verschaltung ermöglicht strukturell und funktional vergleichbar zu dem Anhängersteuer-Bistabilventil ebenfalls einen vereinfachten Aufbau des Zugfahrzeugsteuer-Bistabilventils, da letzteres ebenfalls mittels der zweiten Rückkopplungsleitung überbrückt werden kann. Die Überbrückung erfolgt insbesondere dann, wenn der Betriebsdruck der Zugfahrzeugsteuer-Ausgangsleitung direkt und ohne Zwischenschaltung des Zugfahrzeugsteuer-Bistabilventils an die zweite Steuerleitung übertragen werden soll und mittels der zweiten Steuer-Magnetventileinheit steuerbar sein soll. Eine derartige überbrückte Steuerung kann beispielsweise durch gestuftes Entlüften der Zugfahrzeugsteuer-Ausgangsleitung mittels der zweiten Steuer-Magnetventileinheit erzielt werden.

Das Zugfahrzeugsteuer-Bistabilventil weist ebenfalls (vergleichbar zum Anhängersteuer-Bistabilventil) einen Eingang, einen Ausgang bzw. Arbeitsausgang, einen Steuereingang und einen Entlüftungsausgang auf. Die zweite Steuerleitung ist über den zweiten Steuereingang mit dem Zugfahrzeugsteuer-Bistabilventil verbunden. Die Druckluftquelle ist mit dem Eingang des Zugfahrzeugsteuer-Bistabilventils verbunden. Der Ausgang bzw. Arbeitsausgang des Zugfahrzeugsteuer-Bistabilventils ist über die Zugfahrzeugsteuer-Ausgangsleitung bevorzugter Weise mit wenigstens einem Federspeicherbremszylinder des Zugfahrzeugs verbunden oder verbindbar.

Indem entsprechend einer Durchlassstellung der zweiten Steuer-Magnetventileinheit an dem Steuereingang des Zugfahrzeugsteuer-Bistabilventils ein spezifischer Betriebsdruck angelegt wird, ist eine Verbindung zwischen dem Eingang und dem Ausgang bzw. Arbeitsausgang des Zugfahrzeugsteuer-Bistabilventils herstellbar und steuerbar.

Dieser spezifische Druck muss einem Schwelldruck gleich oder größer sein, um eine Verbindung zwischen Eingang und Ausgang des Zugfahrzeugsteuer-Bistabilventils bereitstellen zu können. Bei Erreichen des Schwelldrucks wird der Entlüftungsausgang des Zugfahrzeugsteuer-Bistabilventils geschlossen.

Anhand von Luftdrücken bzw. Fluiddrücken, die wenigstens gleich oder größer als der vorbestimmbare Schwelldruck sind, ist eine Druckluftverbindung zwischen dem Eingang und dem Ausgang des Zugfahrzeugsteuer-Bistabilventils bedarfsweise steuerbar. Auf diese Weise ist vorteilhaft ein spezifischer Druck am Ausgang bzw. Arbeitsausgang des Zugfahrzeugsteuer-Bistabilventils erzielbar.

Des Weiteren kann vorgesehen sein, dass in der zweiten Steuerleitung zwischen dem Zugfahrzeugsteuer-Bistabilventil und der zweiten Steuer-Magnetventileinheit wenigstens eine zweite Steuer-Abzweigung angeordnet ist, wobei die zweite Steuerleitung an der zweiten Steuer-Abzweigung über wenigstens eine zweite Rückkopplungsleitung an der Zugfahrzeug-Ausgangs-Abzweigung mit der Zugfahrzeugsteuer-Ausgangsleitung verbunden ist.

Es ist folglich möglich, dass die zweite Rückkopplungsleitung in Verbindung mit der zweiten Steuer-Abzweigung und der Zugfahrzeug-Ausgangs-Abzweigung über die zweite Drosseleinheit eine Rückkopplungsverbindung zwischen einem Steuereingang und einem Ausgang des Zugfahrzeugsteuer-Bistabilventils ausbildet.

Anhand der Rückkopplungsleitung liegt eine kontinuierliche Verbindung zwischen dem Ausgang bzw. Arbeitsausgang des Zugfahrzeugsteuer-Bistabilventils und dessen Steuereingang vor.

Sobald der Steuereingang des Zugfahrzeugsteuer-Bistabilventils mit einem hinreichenden Luftdruck belüftet ist, kann über eine Verbindung zwischen dem Eingang und dem Ausgang dieses Bistabilventils die Druckluft an dem Ausgang des Zugfahrzeugsteuer-Bistabilventils bereitgestellt werden.

Der hinreichende Luftdruck orientiert sich hierbei an einem vorzugsweise vorgebbaren Schwelldruck des Zugfahrzeugsteuer-Bistabilventils.

Die Zuführung zusätzlicher Druckluft zu dem zweiten Steuereingang des Zugfahrzeugsteuer-Bistabilventils über die zweite Steuer-Magnetventileinheit ist anschließend nicht mehr zwingend notwendig, um den Betrieb des Zugfahrzeugsteuer-Bistabilventils stabil aufrechtzuerhalten.

Die Funktionalität des Zugfahrzeugsteuer-Bistabilventils entspricht somit im Wesentlichen der Funktionalität des Anhängersteuer-Bistabilventils.

Ferner weist die Parkbremseinrichtung wenigstens eine zweite Drosseleinheit auf, die in der zweiten Rückkopplungsleitung, insbesondere zwischen der Zugfahrzeug-Ausgangs-Abzweigung der Zugfahrzeugsteuer-Ausgangsleitung und der zweiten Steuer-Abzweigung der zweiten Steuerleitung, angeordnet ist.

Die zweite Drosseleinheit ist insbesondere über die zweite Rückkopplungsleitung, die zweite Steuer-Abzweigung und die zweite Steuerleitung mit dem Zugfahrzeugsteuer-Bistabilventil verbunden.

Des Weiteren ist die zweite Rückkopplungsleitung über die zweite Steuerleitung mit der zweiten Steuer-Magnetventileinheit verbunden. Auf diese Weise ist es möglich, eine Entlüftung oder Belüftung wenigstens eines Federspeicherbremszylinders des Zugfahrzeugs bedarfsgerecht und mit hoher Genauigkeit zu steuern bzw. gegebenenfalls zu sperren.

Mittels der zweiten Drosseleinheit in der zweiten Rückkopplungsleitung ist insbesondere ein Luftverlust im Zuge eines Schaltvorgangs zwischen verschiedenen Betriebsmodi eines Kraftfahrzeuges mit der erfindungsgemäßen Parkbremseinrichtung vermeidbar bzw. verringerbar. Ein Schaltvorgang zwischen den Betriebszuständen kann somit schneller, effizienter und präziser erfolgen. Insbesondere ist durch das Unterbinden bzw. Verringern eines Luftverlustes keine Nachregelung von Druckluft notwendig.

Zusätzlich oder alternativ ist es ebenfalls vorstellbar, dass die zweite Drosseleinheit in der ersten Zugfahrzeugsteuer-Ausgangsleitung stromabwärts des Zugfahrzeugsteuer-Bistabilventils und stromaufwärts der Zugfahrzeug-Ausgangs-Abzweigung angeordnet ist.

Zusätzlich ist es vorstellbar, dass die zweite Steuer-Magnetventileinheit wenigstens ein drittes Steuer-Magnetventil und wenigstens ein Entlüftungs-Magnetventil mit wenigstens einem Entlüftungsausgang aufweist.

In diesem Kontext ist vorzugsweise vorgesehen, dass die zweite Steuer-Magnetventileinheit derart ausgestaltet ist, dass zwischen dem Druckluftanschluss und der zweiten Steuerleitung das dritte Steuer-Magnetventil und zwischen der zweiten Steuerleitung und dem Entlüftungsausgang das Entlüftungs-Magnetventil angeordnet ist.

In diesem Sinne kann also das Entlüftungs-Magnetventil den Entlüftungsausgang aufweisen.

Die zweite Steuerleitung verbindet demnach das Zugfahrzeugsteuer-Bistabilventil an einer weiteren Steuer-Abzweigung mit einer Verbindungsleitung des vorzugsweise eigenständigen dritten Steuer-Magnetventils sowie des eigenständigen Entlüftungs-Magnetventils innerhalb der zweiten Steuer-Magnetventileinheit.

Alternativ kann vorgesehen sein, dass die zweite Steuer-Magnetventileinheit als kombinierte Magnetventileinheit umfassend das dritte Steuer-Magnetventil und das Entlüftungs-Magnetventil mit dem Entlüftungsausgang ausgebildet ist.

So kann eine gezielte Steuerbarkeit der Volumina innerhalb der Parkbremseinrichtung, insbesondere zur Belüftung und Entlüftung des Steuereingangs des Zugfahrzeugsteuer-Bistabilventils, erzielt werden.

Ebenfalls ist denkbar, dass die zweite Rückkopplungsleitung in Verbindung mit der zweiten Steuer-Abzweigung und der Zugfahrzeug-Ausgangs-Abzweigung über die zweite Drosseleinheit eine Rückkopplungsverbindung zwischen einem Steuereingang und einem Ausgang des Zugfahrzeugsteuer-Bistabilventils ausbildet.

In diesem Zusammenhang ist es jedoch auch möglich, dass die zweite Rückkopplungsleitung in Verbindung mit der zweiten Steuer-Abzweigung und der Zugfahrzeug-Ausgangs-Abzweigung eine Rückkopplungsverbindung zwischen einem Steuereingang und einem Ausgang des Zugfahrzeugsteuer-Bistabilventils ausbildet.

So kann ein Druck von dem bedruckten bzw. belüfteten Ausgang bzw. Arbeitsausgang des Zugfahrzeugsteuer-Bistabilventils bedarfsweise zur Steuerung dessen eigenen Steuereingangs einsetzbar sein.

Im Übrigen ermöglicht die Rückkopplung des Betriebsdrucks am Ausgang des Zugfahrzeugsteuer-Bistabilventils an seinen eigenen Steuereingang eine verkürzte Schaltdauer bzw. Bestromungsdauer der zweiten Steuer-Magnetventileinheit, da nach Erreichen eines hinreichend großen Schwellsteuerdruckes an dem Steuereingang des Zugfahrzeugsteuer-Bistabilventils die zweite Steuer-Magnetventileinheit wieder in den stromlosen Zustand überführbar ist.

Anhand elektromagnetisch schaltbarer, federbelasteter Ventile kann somit ein stromloser Schaltzustand stets sichergestellt werden, insbesondere sobald ein in gezielter Form, z.B. durch elektromagnetisches Schalten, herbeigeführter Schaltzustand beendet wird.

Weiterhin kann vorgesehen sein, dass das Zugfahrzeugsteuer-Bistabilventil als Zugfahrzeugsteuer-Relaisventil ausgebildet ist und/oder das Anhängersteuer-Bistabilventil als Anhängersteuer-Relaisventil oder als pneumatisch ansteuerbares 3/2-Wege-Ventil ausgebildet ist.

Für den Fall, dass das Anhängersteuer- und Zugfahrzeugsteuer-Bistabilventil jeweils als ein Relaisventil ausgebildet ist, ist am Ausgang bzw. Arbeitsausgangs des Anhängersteuer- und Zugfahrzeugsteuer-Bistabilventils ist ein Druck bereitstellbar, der vorzugsweise proportional zu dem Druck am Steuereingang des Anhängersteuer- und Zugfahrzeugsteuer-Bistabilventils ist. Durch eine derartige proportionale Ansteuermöglichkeit des Anhängersteuer- und Zugfahrzeugsteuer-Bistabilventils in Form eines Relaisventils ist eine sehr präzise, effiziente und sichere Ansteuerung der Zugfahrzeugbremse und der Anhängerbremse erzielbar.

Im Falle des Anhängersteuer-Bistabilventils kann jedoch ebenfalls der Einsatz eines rückkoppelbaren 3/2-Wege-Ventils als ausreichend vorgesehen sein. Denn die Druckluft-Volumina zur Ansteuerung eines Steuereingangs eines Anhängersteuerventils sind deutlich geringer als die vergleichbaren zu steuernden Druckluft-Volumina der Betriebsbremszylinder und/oder Federspeicherbremszylinder des Zugfahrzeugs, die stromabwärts des Zugfahrzeug-Bistabilventils zu steuern sind. Demnach bietet das Vorsehen des 312-Wege-Ventils eine strukturelle Vereinfachung der erfindungsgemäßen Parkbremseinrichtung aus, wodurch letztere günstiger in der Herstellung, im Betrieb und in der Wartung ist.

Die vorstehend beschriebene Parkbremseinrichtung ist vorzugsweise auch zur Steuerung wenigstens eines Federspeicherbremszylinders und/oder wenigstens eines Betriebsbremszylinder des Anhängers vorgesehen. So ist eine Parkbremse des Anhängers mittels des Anhängersteuer-Bistabilventils bzw. Relaisventils steuerbar und/oder regelbar.

In diesem Sinne kann die Parkbremseinrichtung einen Anhängersteuer-Ausgang als den ersten Druckluftausgang aufweisen, der über die Anhängersteuer-Ausgangsleitung mit dem Ausgang bzw. Arbeitsausgang des Anhängersteuer-Bistabilventils verbunden ist.

Die Parkbremseinrichtung stellt somit eine Einrichtung zur bedarfsweisen Ansteuerung der Bremssysteme eines Kraftfahrzeuges, insbesondere eines Zugfahrzeuges und eines Anhängers, bereit.

Des Weiteren kann die erste Steuer-Magnetventileinheit mit dem ersten Steuer-Magnetventil und dem zweiten Steuer-Magnetventil derart ausgestaltet sein, dass das erste Steuer-Magnetventil in Verbindung mit der ersten Steuerleitung vorgesehen ist und zwischen der ersten Steuerleitung und der Bypasssteuerleitung das zweite Steuer-Magnetventil vorgesehen ist.

Somit verbindet die erste Steuerleitung das Anhängersteuer-Bistabilventil mit der entsprechenden weiteren Steuer-Abzweigung der Verbindungsleitung des vorzugsweise eigenständigen ersten Steuer-Magnetventils sowie des eigenständigen zweiten Steuer-Magnetventils innerhalb der ersten Steuer-Magnetventileinheit. Die weitere Steuer-Abzweigung ist dabei in der Verbindungsleitung zwischen dem ersten Steuer-Magnetventil und dem zweiten Steuer-Magnetventil angeordnet.

Bevorzugter Weise ist die vorstehend beschriebene Parkbremseinrichtung ferner zur Bereitstellung eines Betriebsbremsenausgangs und eines Federspeicherbremszylinderausgangs für ein Zugfahrzeug vorgesehen. Der zweite Druckluftausgang kann insbesondere zwei getrennte Druckluftausgänge in Form des Betriebsbremsenausgangs und des Federspeicherbremszylinderausgangs aufweisen. So kann die Betriebsbremse und die Parkbremse eines Zugfahrzeugs zweckmäßig belüftet bzw. entlüftet werden.

Vorzugsweise kann die Parkbremseinrichtung des Weiteren ein insbesondere druckgesteuertes Wechsel-Rückschlagventil aufweisen, dass mit dem Betriebsbremsenausgang und dem Federspeicherbremszylinderausgang sowie dem Ausgang des Zugfahrzeugsteuer-Bistabilventils verbunden ist.

Vorzugsweise ist das Wechsel-Rückschlagventil als ein sogenanntes Select-High-Ventil vorgesehen.

Insbesondere kann weiter vorgesehen sein, dass die erste und zweite Steuer-Magnetventileinheit unabhängig voneinander steuerbar sind. So können das Zugfahrzeug und der Anhänger eigenständig und unabhängig voneinander angesteuert werden und eine bedarfsweise Bremswirkung aufbringen.

So kann eine gezielte Steuerbarkeit der Volumina innerhalb der Parkbremseinrichtung insbesondere zur Belüftung und Entlüftung der Steuereingänge des Anhängersteuer- und Zugfahrzeugsteuer-Bistabilventils, erzielt werden.

Darüber hinaus ist es möglich, dass das erste und zweite Steuer-Magnetventil als stromlos geschlossene bzw. pneumatisch gesperrte Magnetventile vorgesehen sind. Somit ist eine Belüftung bzw. Entlüftung des Anhängersteuer- und Zugfahrzeugsteuer-Bistabilventils lediglich zur Umschaltung der Betriebszustände der erfindungsgemäßen Parkbremseinrichtung notwendig.

Bevorzugter Weise kann folglich ein Betriebszustand, insbesondere ein Fahrzustand oder ein Parkzustand, ausgeführt werden, wobei das erste, zweite und dritte Steuer-Magnetventil sowie das Entlüftungsventil stromlos geschlossen sind.

Weitere Einzelheiten und Vorteile der Erfindung sollen nun anhand der in den Zeichnungen näher dargestellten Ausführungsbeispiele erläutert werden.

Es zeigen:
- Fig. 1: ein erstes Ausführungsbeispiel einer erfindungsgemäßen Parkbremseinrichtung in einem Parkzustand; und
- Fig. 2: ein zweites Ausführungsbeispiel einer erfindungsgemäßen Parkbremseinrichtung in einem Parkzustand.

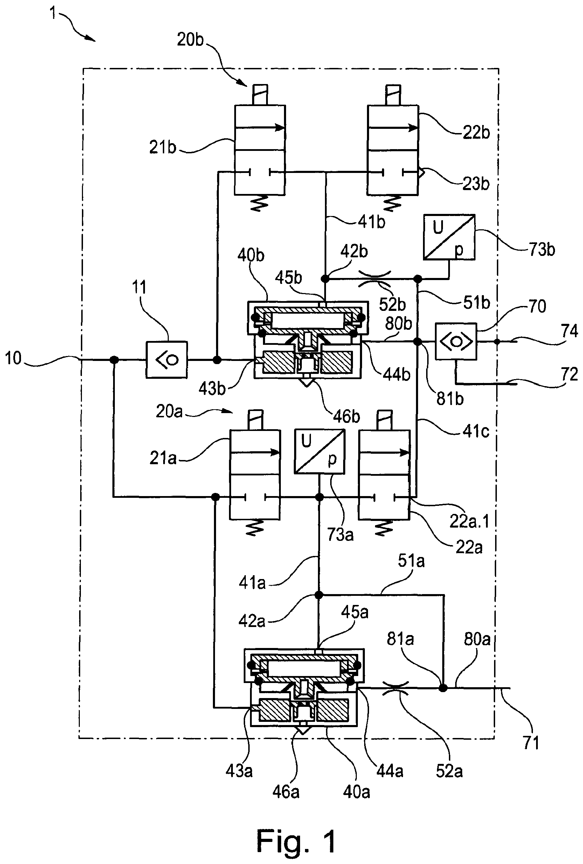

**Fig. 1** zeigt in schematischer Darstellung eine Parkbremseinrichtung 1 für ein Kraftfahrzeug, hier ein Nutzfahrzeug.

Die Parkbremseinrichtung 1 weist eine einen Druckluftanschluss 10 und eine erste Steuer-Magnetventileinheit 20a und ein Anhängersteuer-Bistabilventil 40a für einen Anhänger bzw. einen Trailer auf.

Das Anhängersteuer-Bistabilventil 40a ist als Anhängersteuer-Relaisventil 40a ausgebildet.

Das Anhängersteuer-Relaisventil 40a ist mit einem Eingang 43a, mit einem Ausgang bzw. Arbeitsausgang 44a, einem Steuereingang 45a und einem Entlüftungsausgang 46a vorgesehen.

Der Druckluftanschluss 10 ist mit dem Eingang 43a des Anhängersteuer-Relaisventils 40a verbunden.

Das Anhängersteuer-Relaisventil 40a stellt ein bistabiles Element dar.

In Abhängigkeit von dem Druck an dem Steuereingang 45a des Anhängersteuer-Relaisventils 40a sind an dessen Ausgang 44a verschiedene Betriebszustände der Parkbremseinrichtung 1 für einen Anhänger bzw. dessen Anhängersteuerventil in Form von Luftdrücken abbildbar, insbesondere ein erster und ein zweiter Parkzustand, ein Fahrzustand und ein abgestufter Bremszustand.

Des Weiteren kann im Sinne des ersten Ausführungsbeispiels gemäß Fig. 1 auch ein Streckbrems-Zustand vorgesehen sein.

Insbesondere ist in Fig. 1 das Ausführungsbeispiel in einem ersten Parkzustand dargestellt.

Die erste Steuer-Magnetventileinheit 20a ist weiter mit einem ersten Steuer-Magnetventil 21a und einem zweiten Steuer-Magnetventil 22a vorgesehen.

Das erste Steuer-Magnetventil 21a und das zweite Steuer-Magnetventil 22a sind als elektrisch betätigbare bzw. ansteuerbare 2/2-Wegeventile vorgesehen.

Das erste Steuer-Magnetventil 21a ist stromlos geschlossen ausgestaltet.

Das zweite Steuer-Magnetventil 22a ist stromlos geschlossen ausgestaltet.

Der Druckluftanschluss 10 ist mit der ersten Steuer-Magnetventileinheit 20a, insbesondere mit dem ersten Steuer-Magnetventil 21a verbunden.

Der Druckluftanschluss 10 ist hier repräsentiert durch eine nicht näher dargestellte Druckluftquelle sowie einem gezeigten Rückschlagventil 11.

Des Weiteren ist die Parkbremseinrichtung 1 mit einer ersten Steuerleitung 41a vorgesehen.

Die erste Steuerleitung 41a ist mit der ersten Steuer-Magnetventileinheit 20a derart verbunden, dass das erste Steuer-Magnetventil 21a und das zweite Steuer-Magnetventil 22a unabhängig voneinander mit der ersten Steuerleitung 41a verbunden sind.

Die erste Steuerleitung 41 ist mit dem Steuereingang 45a des Anhängersteuer-Relaisventils 40a verbunden.

Somit ist eine pneumatische Verbindung zwischen der ersten Steuer-Magnetventileinheit 20a und dem ersten Steuereingang 45a des Anhängersteuer-Relaisventils 40a verfügbar.

Die erste Steuerleitung 41a weist stromaufwärts des Anhängersteuer-Relaisventils 40a eine erste Steuer-Abzweigung 42a auf.

Des Weiteren weist die Parkbremseinrichtung 1 eine erste Rückkopplungsleitung 51a auf.

Die erste Rückkopplungsleitung 51a ist über die erste Steuer-Abzweigung 42a mit der ersten Steuerleitung 41a verbunden.

Des Weiteren ist die erste Rückkopplungsleitung 51a über eine Anhänger-Ausgangs-Abzweigung 81a an eine Anhängersteuer-Ausgangsleitung 80a angeschlossen.

Es liegt demnach eine rückgekoppelte Verbindung zwischen dem Steuereingang 45a und des Arbeitsausgangs 44a des Anhängersteuer-Relaisventils 40a über die erste Rückkopplungsleitung 51a vor.

So ist die erste Rückkopplungsleitung 51a über die Anhänger-Ausgangs-Abzweigung 81a mit dem Ausgang bzw. Arbeitsausgang 44a des Anhängersteuer-Relaisventils 40a verbunden.

In diesem Sinne bildet die erste Rückkopplungsleitung 51a eine Rückkopplungsverbindung zwischen dem Ausgang 44a und dem Steuereingang 45a des Anhängersteuer-Relaisventils 40 aus.

Die Parkbremseinrichtung 1 weist des Weiteren einen ersten Druckluftausgang 71 in Form eines Anhänger-Steuerausgangs 71 auf.

Von dem Ausgang 44a des Anhängersteuer-Relaisventils 40a kann Druckluft nach Fig. 1 über die Anhängersteuer-Ausgangsleitung 80a an den Anhänger-Steuerausgang 71 geleitet werden.

Ausgehend von dem Anhänger-Steuerausgang 71 kann die Druckluft bevorzugt einem Steuereingang eines Anhängersteuerventils (nicht in Fig. 1 gezeigt) zur Steuerung eines oder mehrerer Federspeicherbremszylinder des Anhängers zugeführt werden.

Allgemein ist im Sinne der vorliegenden Erfindung bevorzugter Weise vorgesehen, dass eine erste Drosseleinheit 52a in der Anhängersteuer-Ausgangsleitung 80a zwischen dem Ausgang 44a des Anhängersteuer-Relaisventils 40a und der Anhänger-Ausgangs-Abzweigung 81a angeordnet ist.

Ferner ist im Sinne der vorliegenden Erfindung zusätzlich oder alternativ vorgesehen, dass eine weitere Drosseleinheit entlang der ersten Rückkopplungsleitung 51a zwischen der ersten Steuer-Abzweigung 42a der ersten Steuerleitung 41a und der Anhänger-Ausgangs-Abzweigung 81a der Anhängersteuer-Ausgangsleitung 80a angeordnet ist.

Anhand der ersten Rückkopplungsleitung 51a mit der ersten Drosseleinheit 52a kann der Fluiddruck bzw. Luftdruck an dem Ausgang 44a des Anhängersteuer-Relaisventils 40a gezielt eingestellt und gesteuert bzw. geregelt werden.

In einer Verbindungsleitung zwischen dem ersten und zweiten Steuer-Magnetventil 21a, 22a kann darüber hinaus ein erster Drucksensor 73a angeordnet sein.

Somit ist der Luftdruck bzw. Fluiddruck an dem Steuereingang 45a des Anhängersteuer-Relaisventils 40a erfassbar und gezielt steuerbar und/oder regelbar.

Des Weiteren ist in Fig. 1 ein Zugfahrzeugsteuer-Bistabilventil 40b und eine zweite Steuer-Magnetventileinheit 20b der Parkbremseinrichtung 1 gezeigt.

Das Zugfahrzeugsteuer-Bistabilventil 40b ist als Zugfahrzeugsteuer-Relaisventil 40b ausgebildet.

Die zweite Steuer-Magnetventileinheit 20b ist mit einem dritten Steuer-Magnetventil 21b, einem Entlüftungsventil bzw. Entlüftungs-Magnetventil 22b und einem Entlüftungsausgang 23b gezeigt.

Der Entlüftungsausgang 23b kann gemäß Fig. 1 in dem Entlüftungs-Magnetventil 22b integriert vorliegen.

Das dritte Steuer-Magnetventil 21b ist demnach vergleichbar zu dem ersten Steuer-Magnetventil 21a ausgestaltet.

Das dritte Steuer-Magnetventil 21b und das Zugfahrzeugsteuer-Relaisventil 40b sind bevorzugter Weise mit dem Druckluftanschluss 10 verbunden.

Alternativ kann es ebenfalls vorgesehen sein, dass das dritte Steuer-Magnetventil 21b und das Zugfahrzeugsteuer-Relaisventil 40b mit einem getrennten, zweiten Druckluftanschluss verbunden sind, welcher im Wesentlichen vergleichbar zu dem vorstehend beschriebenen Druckluftanschluss 10 ausgebildet ist.

Der zweite Druckluftanschluss (nicht in Fig. 1 gezeigt) kann somit ebenfalls durch eine nicht näher dargestellte Druckluftquelle sowie ein zweites Rückschlagventil ausgebildet sein.

Des Weiteren weist die Parkbremseinrichtung 1 gemäß Fig. 1 eine zweite Steuerleitung 41b auf.

Die zweite Steuer-Magnetventileinheit 20b und das Zugfahrzeugsteuer-Relaisventil 40b sind über die zweite Steuerleitung 41b miteinander verbunden.

Ebenso wie das Anhängersteuer-Relaisventil 40a, weist das Zugfahrzeugsteuer-Relaisventil 40b einen Eingang 43b, einen Ausgang 44b, einen Steuereingang 45b und einen Entlüftungsausgang 46b auf.

Die zweite Steuerleitung 41b ist mit dem Steuereingang 45b des Zugfahrzeugsteuer-Relaisventils 40b verbunden.

Die Funktionsweise des Anhängersteuer- und Zugfahrzeugsteuer-Relaisventils 40a; 40b ist bevorzugter Weise identisch bzw. vergleichbar.

Stromaufwärts des Zugfahrzeugsteuer-Relaisventils 40b ist in der zweiten Steuerleitung 41b eine zweite Steuer-Abzweigung 42b vorgesehen.

Darüber hinaus weist die Parkbremseinrichtung 1 eine zweite Rückkopplungsleitung 51b auf, die über die zweite Steuer-Abzweigung 42b mit der zweiten Steuerleitung 41b verbunden ist.

Die zweite Rückkopplungsleitung 51b ist über eine Zugfahrzeug-Ausgangs-Abzweigung 81b an eine Zugfahrzeugsteuer-Ausgangsleitung 80b angeschlossen.

Die Zugfahrzeugsteuer-Ausgangsleitung 80b ist mit dem Ausgang 44b des Zugfahrzeugsteuer-Relaisventils 40b verbunden.

Somit bildet die zweite Rückkopplungsleitung 51b eine Rückkopplung von dem Ausgang 44b des Zugfahrzeugsteuer-Relaisventils 40b über die Zugfahrzeugsteuer-Ausgangsleitung 80b, die Zugfahrzeug-Ausgangs-Abzweigung 81b, die zweite Steuer-Abzweigung 42b und die Steuerleitung 41b zu dem Steuereingang 45b des Zugfahrzeugsteuer-Relaisventils 40b aus.

In der zweiten Rückkopplungsleitung 51b ist zwischen der Zugfahrzeug-Ausgangs-Abzweigung 81b der Zugfahrzeugsteuer-Ausgangsleitung 80b und der zweiten Steuer-Abzweigung 42b der zweiten Steuerleitung 41b eine zweite Drosseleinheit 52b angeordnet.

Mit der zweiten Rückkopplungsleitung 51b und der zweiten Drosseleinheit 52b liegt somit kontinuierlich eine, insbesondere gedrosselte, Rückkopplung zwischen dem Ausgang 44b und dem Steuereingang 45b des Zugfahrzeugsteuer-Relaisventils 40b vor.

In der zweiten Rückkopplungsleitung 51b des Zugfahrzeugsteuer-Relaisventils 40b kann darüber hinaus ein zweiter Drucksensor 73b angeordnet sein.

Somit ist der Luftdruck bzw. Fluiddruck an dem Ausgang 44b des Zugfahrzeugsteuer-Relaisventils 40b erfassbar und gezielt steuerbar und/oder regelbar.

Von dem Ausgang 44b des Zugfahrzeugsteuer-Relaisventils 40b kann Druckluft nach Fig. 1 entlang der Zugfahrzeugsteuer-Ausgangsleitung 80b über das Select-High-Ventil 70 an einen zweiten Druckluftausgang 72 in Form eines Federspeicherbremszylinderausgangs 72 für das Zugfahrzeug eines Nutzfahrzeuges weitergeleitet werden.

Das Select-High-Ventil 70 ist über die Zugfahrzeugsteuer-Ausgangsleitung 80b mit der zweiten Rückkopplungsleitung 51b, dem Federspeicherbremszylinderausgang 72 und weiteren Druckluftausgang 74, ausgebildet als ein Betriebsbremsenausgang 74 für ein Zugfahrzeug, verbunden.

Der Federspeicherbremszylinderausgang 72 und der Betriebsbremsenausgang 74 stellen in diesem Sinne Druckluftausgänge für einen oder mehrere Federspeicherbremszylinder der Parkbremse bzw. für einen oder mehrere Betriebsbremszylinder der Betriebsbremse dar.

Das Select-High-Ventil 70 folgt in seinem Schaltverhalten dem vorliegenden vorrangigen Druckgefälle.

So kann der Federspeicherbremszylinderausgang 72 mit einem hohen Druck des Ausgangs 44b des Zugfahrzeugsteuer-Relaisventils 40b belüftet werden, wobei die Verbindung zum Betriebsbremsenausgang 74, an dem ein niedrigerer Druck anliegt, gesperrt ist.

Darüber hinaus ist bei Betätigung der Betriebsbremse und einem damit verbundenen Druckaufbau an dem Betriebsbremsenausgang 74 ein Übergang von Druckluft von dem Betriebsbremsenausgang 74 zu dem Federspeicherbremszylinderausgang 72 über das Select-High-Ventil 70 möglich.

Sofern an dem Betriebsbremsenausgang 74 ein höherer Druck anliegt als an dem Ausgang 44b des Zugfahrzeugsteuer-Relaisventils 40b, eröffnet das Select-High-Ventil 70 gemäß dem Druckgefälle eine Verbindung zwischen dem Betriebsbremsenausgang 74 und dem Federspeicherbremszylinderausgang 72.

Es ist folglich eine kombinierte Bremswirkung bei Betätigung der Betriebsbremse des Zugfahrzeugs an dem Betriebsbremsenausgang 74 in Kombination mit wenigstens einem Federspeicherbremszylinder des Zugfahrzeugs an dem Federspeicherbremszylinderausgang 72 anhand des Select-High-Ventils 70 erzielbar.

Eine Verbindung des Zugfahrzeugsteuer-Relaisventils 40b, insbesondere dessen Ausgang 44b, und des Select-High-Ventils 70, insbesondere des Betriebsbremsausgangs 74 und/oder des Federspeicherbremszylinderausgangs 72, zu der zweiten Steuerleitung 41b entlang der zweiten Rückkopplungsleitung 51b ist mittels der zweiten Drosseleinheit 52b steuer- bzw. kontrollierbar.

Im Wesentlichen sind die pneumatische Verschaltung des Anhängersteuer-Relaisventils 40a und des Zugfahrzeugsteuer-Relaisventils 40b in ihrem grundlegenden Aufbau miteinander vergleichbar.

Allerdings unterscheidet sich die pneumatische Verschaltung der Anhängersteuer-Ausgangsleitung 80a und der Zugfahrzeugsteuer-Ausgangsleitung 80b zwischen der Anhänger- und Zugfahrzeug-Ausgangs-Abzweigung 81a, 81b und den jeweilig zugeordneten Ausgängen 71, 72, 74..

So ist beispielsweise gemäß Fig. 1 die Anordnung des Select-High-Ventils 70 zur Verbindung des Federspeicherbremszylinderausgangs 72 und des Betriebsbremsenausgangs 74 mit dem Ausgang 44b des Zugfahrzeugsteuer-Relaisventils 40b lediglich im Zusammenhang mit der pneumatischen Verschaltung des Zugfahrzeugsteuer-Relaisventils 40b vorgesehen.

Ferner weist die erste Steuer-Magnetventileinheit 20a eine andere pneumatische Anbindung als die zweite Steuer-Magnetventileinheit 20b auf.

So weist die zweite Steuer-Magnetventileinheit 20b gemäß Fig. 1 ein drittes Steuer-Magnetventil 21b, ein Entlüftungs-Magnetventil 22b und ein Entlüftungsausgang 23b auf.

Der Entlüftungsausgang 23b kann gemäß Fig. 1 in dem Entlüftungs-Magnetventil 22b integriert ausgebildet sein.

Die erste Steuer-Magnetventileinheit 20a wiederum weist ein zur zweiten Steuer-Magnetventileinheit 20b vergleichbares und demensprechend pneumatisch vergleichbar verschaltetes erstes Steuer-Magnetventil 21a auf.

Jedoch unterscheiden sich das zweite Steuer-Magnetventil 22a der ersten Steuer-Magnetventileinheit 20a und das Entlüftungs-Magnetventil 22b der zweiten Steuer-Magnetventileinheit 20b in ihrem Aufbau und in ihrer pneumatischen Anbindung in der Parkbremseinrichtung 1.

Anstelle des Entlüftungsausgangs 23b gemäß dem Entlüftungs-Magnetventil 22b weist das zweite Steuer-Magnetventil 22a einen weiteren Steueranschluss in Form eines Bypasssteueranschluss 22a.1 auf.

Anhand dieses Bypasssteueranschluss 22a.1 ist das zweite Steuer-Magnetventil 22a über eine Bypasssteuerleitung 41c mit der Zugfahrzeugsteuer-Ausgangsleitung 80b, vorzugsweise über die Zugfahrzeug-Ausgangs-Abzweigung 81b, verbunden.

Gemäß Fig. 1 ist mittels der Bypasssteuerleitung 41c die Zugfahrzeugsteuer-Ausgangsleitung 80b an ihrer Zugfahrzeug-Ausgangs-Abzweigung 81b (angeordnet zwischen dem Zugfahrzeugsteuer-Relaisventil 40b und dem Federspeicherbremszylinderausgang 72 bzw. dem Betriebsbremsenausgang 74) mit der ersten Steuer-Magnetventileinheit 20a verbindbar.

Anhand dieser zusätzlichen Bypassverbindung ist die Anhängersteuer-Ausgangsleitung 80a über die erste Rückkopplungsleitung 51a und die erste Steuerleitung 41a mit der Zugfahrzeugsteuer-Ausgangsleitung 80b verbindbar, so dass der Betriebsdruck von der Zugfahrzeugsteuer-Ausgangsleitung 80b in die Anhängersteuer-Ausgangsleitung 80a einsteuerbar ist.

Ferner kann mittels des Entlüftungs-Magnetventils 22b zur Einstellung einer gestuften Betriebsdruckabnahme sowohl die Zugfahrzeugsteuer-Ausgangsleitung 80b als auch die Anhängersteuer-Ausgangsleitung 80a entlüftet werden.

Im Folgenden wird die Wirkungsweise der Parkbremseinrichtung 1 gemäß Fig. 1 erläutert:
In einem **ersten Parkzustand** bzw. gemäß einer **ersten Parkstrategie** (jeweilige Schaltstellungen der Ventile wie in Fig. 1 dargestellt) sind das erste und das zweite Steuer-Magnetventil 21a; 21b stromlos und pneumatisch gesperrt geschaltet.

So kann keine Druckluft von dem Druckluftanschluss 10 bzw. von einer externen Druckluftquelle in die erste Steuerleitung 41a bzw. die zweite Steuerleitung 41b eintreten.

Somit liegt jeweils keine Rückkopplung zwischen dem jeweiligen Ausgang 44a; 44b und dem jeweiligen Steuereingang 45a; 45b des Anhängersteuer- und Zugfahrzeugsteuer-Relaisventils 40a; 40b vor.

Des Weiteren ist lediglich der Eingang 43a; 43b des Anhängersteuer- und Zugfahrzeugsteuer-Relaisventils 40a; 40b mit Druckluft versorgt.

Indem an den Steuereingängen 45a; 45b des Anhängersteuer- und Zugfahrzeugsteuer-Relaisventils 40a; 40b kein Druck anliegt, sind deren jeweiligen Entlüftungsausgänge 46a; 46b geöffnet.

Die erste Rückkopplungsleitung 51a und die zweite Rückkopplungsleitung 52a sind über die Entlüftungsausgänge 46a; 46b des Anhängersteuer- und Zugfahrzeugsteuer-Relaisventils 40a, 40b entlüftet.

Anhand des pneumatischen Verschaltung gemäß Fig. 1 ist auch die erste Steuerleitung 41a über den Entlüftungsausgang 46a entlüftet, ebenso wie zweite Steuerleitung 41b über den Entlüftungsausgang 46b entlüftet ist.

Somit ist auch der Federspeicherbremszylinderausgang 72 der Parkbremseinrichtung für das Zugfahrzeug und der Anhänger-Steuerausgang 71 zur Ansteuerung eines Steuereingangs des Anhängersteuerventils (jeweils nicht in Fig. 1 gezeigt) entlüftet.

Die Entlüftung des Federspeicherbremszylinderausgangs 72 bewirkt eine entsprechende Entlüftung der Federkompressionsräume der Federspeicherbremszylinder des Fahrzeugs, woraufhin eine Betätigung der Zugfahrzeug-Bremsanlage erfolgt.

Die Entlüftung des Anhänger-Steuerausgangs 71 bewirkt jedoch aufgrund der inversen pneumatischen Ansteuerung des Steuereingangs des Anhängersteuerventils, dass die Betriebsbremszylinder des Anhängers mit Druckluft versorgt werden, so dass sich der Anhänger ebenfalls in einem gebremsten Parkzustand befindet.

Dieser erste Parkzustand in Form eines gebremsten Parkzustands des Anhängers liegt insbesondere in einem wenigstens teilweise beladenen Zustand des Anhängers vor

Derartige Anhänger sind z.B. als Nachläufer-Anhänger ausgebildet und können beispielsweise zum Transport von länglichem und abschnittsweise selbstragendem Transportgut wie Baumstämme, Träger bzw. Balken (aus Holz, Stahl, Beton usw.) eingesetzt werden.

Die Federspeicherbremszylinder des Zugfahrzeugs bzw. die Betriebsbremszylinder des Anhängers sind in diesem Sinne aktiviert und erbringen eine Bremskraft.

Der Betriebsbremsenausgang 74 der Parkbremseinrichtung 1 für das Zugfahrzeug ist im ersten Parkzustand entlüftet. Die Betriebsbremse des Zugfahrzeugs ist in diesem Sinne gelöst.

In einem **zweiten Parkzustand** bzw. gemäß einer **zweiten Parkstrategie** (nicht in Fig. 1 dargestellt) wird das erste Steuer-Magnetventil 21a bestromt, so dass es in eine geöffnete Stellung bzw. Durchlassstellung überführt wird.

Das zweite Steuer-Magnetventil 21b zur Steuerung der Parkbremse des Zugfahrzeugs ist weiterhin wie in Fig. 1 dargestellt stromlos und pneumatisch gesperrt geschaltet.

Die Durchlassstellung des ersten Steuer-Magnetventils 21a bewirkt eine Belüftung des Steuereingangs 45a des Anhängersteuer-Relaisventils 40a, woraufhin das Anhängersteuer-Relaisventil 40a bei Erreichen eines Steuer-Schwelldruckes von einer gesperrten Stellung in eine Durchlassstellung wechselt.

Der Eingang 43a und der Ausgang 44a des Anhängersteuer-Relaisventils 40a sind folglich miteinander pneumatisch verbunden, sodass Druckluft von dessen Eingang 43a an dessen Ausgang 44a bereitgestellt wird.

Diese Bereitstellung von Druckluft hat ferner ein Belüften der ersten Rückkopplungsleitung 51a, der ersten Steuerleitung 41a und insbesondere der Anhängersteuer-Ausgangsleitung 80a zur Folge.

Sobald der Steuereingang 45a und der Anhänger-Steuerausgang 71 hinreichend belüftet ist, wird das erste Steuer-Magnetventil 21a getrennt bzw. geschlossen geschaltet.

Die stabile Belüftung oberhalb des Steuer-Schwelldruckes des ersten Steuereingangs 45a des Anhängersteuer-Relaisventils 40a erfolgt bei nun geschlossenem ersten Steuer-Magnetventil 21a über die erste Rückkopplungsleitung 51a sowie den Betriebsdruck der Anhängersteuer-Ausgangsleitung 80a. Somit ist der Anhänger-Steuerausgang 71 belüftet.

Die Belüftung des Anhänger-Steuerausgangs 71 bewirkt aufgrund der inversen pneumatischen Ansteuerung des Steuereingangs des Anhängersteuerventils, dass die Betriebsbremszylinder des Anhängers nicht mit Druckluft versorgt bzw. entlüftet werden, so dass sich der Anhänger in einem ungebremsten Parkzustand befindet.

Dieser zweite Parkzustand des Anhängers, der z.B. als Nachläufer-Anhänger ausgestaltet ist, in Form eines ungebremsten Parkzustands liegt insbesondere in einem unbeladenen Zustand des Anhängers vor.

Die Federspeicherbremszylinder des Zugfahrzeugs wiederum sind wie im ersten Parkzustand entlüftet und dadurch aktiviert und erbringen eine Bremskraft.

Lediglich die Betriebsbremszylinder des Anhängers sind in diesem Sinne deaktiviert und erbringen keine Bremskraft.

Der Betriebsbremsenausgang 74 der Parkbremseinrichtung 1 für das Zugfahrzeug ist auch im zweiten Parkzustand entlüftet. Die Betriebsbremse des Zugfahrzeugs ist in diesem Sinne gelöst.

Um von dem **ersten Parkzustand in einen Fahrzustand** zu gelangen wird gemäß Fig. 1 gegenüber dem ersten Parkzustand das erste und das zweite Steuer-Magnetventil 21a; 21b bestromt und offen bzw. durchlässig geschaltet.

Um dementsprechend von dem **zweiten Parkzustand in einen Fahrzustand** zu gelangen wird gemäß Fig. 1 gegenüber dem zweiten Parkzustand das erste Steuer-Magnetventil 21a nicht angesteuert, da es wie vorstehend erläutert gemäß zweitem Parkzustand zumindest temporär bereits offen bzw. durchlässig geschaltet ist und die Anhängersteuer-Ausgangsleitung 80a bereits belüftet ist.

Durch die nun offen geschalteten Steuer-Magnetventile 21a; 21b wird Druckluft in die erste und zweite Steuerleitungen 41a; 41b eingeleitet.

Über die Steuerleitungen 41a; 41b werden die Steuereingänge 45a; 45b des Anhängersteuer- und Zugfahrzeugsteuer-Relaisventils 40a; 40b belüftet.

Bei Erreichen bzw. Überschreiten eines Steuer-Schwelldrucks wird in den Relaisventilen 40a; 40b jeweils eine Verbindung zwischen dem Eingang 43a; 43b und dem Ausgang 43a; 43b hergestellt, sodass Druckluft an den Ausgängen 44a; 44b bereitgestellt wird.

Bei Erreichen bzw. Überschreiten des Steuer-Schwelldrucks an den Steuereingängen 45a; 45b werden die Entlüftungsausgänge 46a; 46b des Anhängersteuer- und Zugfahrzeugsteuer-Relaisventils 40a; 40b geschlossen.

Der nun am Ausgangs 44b des Zugfahrzeugsteuer-Relaisventils 40b anliegende Betriebsdruck wird gemäß der vorliegenden Druckdifferenz, entlang der Zugfahrzeugsteuer-Ausgangsleitung 80b über das Select-High-Ventil 70 an den Federspeicherbremszylinderausgang 72 weitergeleitet.

Dementsprechend wird auch der Betriebsdruck des Ausgangs 44a des Anhängersteuer-Relaisventils 40a an den Anhänger-Steuerausgang 71 weitergeleitet.

Der Federspeicherbremszylinderausgang 72 und der Anhänger-Steuerausgang 71 werden somit belüftet. In diesem Sinne werden die Parkbremse des Zugfahrzeugs sowie die Betriebsbremse des Anhängers gelöst, so dass keine Bremskraft aufgebracht wird und das Nutzfahrzeug sich in einem Fahrzustand befindet.

Sobald der Federspeicherbremszylinderausgang 72 und der Anhänger-Steuerausgang 71 hinreichend belüftet sind, werden das erste und das zweite Steuer-Magnetventil 21a; 21b getrennt bzw. geschlossen geschaltet.

Die stabile Belüftung oberhalb des Steuer-Schwelldruckes der jeweiligen Steuereingänge 45a, 45b des Anhängersteuer- und Zugfahrzeugsteuer-Relaisventils 40a, 40b erfolgt bei nun geschlossenen Steuer-Magnetventilen 21a, 21b über die jeweilige erste und zweite Rückkopplungsleitung 51a, 51b sowie den Betriebsdruck der Anhängersteuer-Ausgangsleitung 80a und der Zugfahrzeugsteuer-Ausgangsleitung 80b.

Somit sind der Anhänger-Steuerausgang 71 und der Federspeicherbremszylinderausgang 72 belüftet.

Der Betriebsbremsenausgang 74 für ein Zugfahrzeug ist entlüftet.

Im diesem Sinne ist ein Fahrzustand des Kraftfahrzeuges in Form eines Nutzfahrzeugs, mit einem Zugfahrzeug und einem Anhänger, erreicht.

Um von einem **Fahrzustand** entsprechend in den **ersten Parkzustand** zu gelangen, werden ausgehend von dem Fahrzustand zunächst das Steuer-Magnetventil 22a sowie das Entlüftungs-Magnetventil 22b offen bzw. durchlässig geschaltet, so dass grundsätzlich Druckluft über den Entlüftungsausgang 23b austreten kann.

Betriebsdruck der ersten und zweiten Steuerleitung 41a, 41b in Verbindung mit dem Steuereingängen 45a; 45b wird abgebaut bzw. entlüftet.

Die Entlüftung der zweiten Steuerleitung 41b erfolgt unmittelbar über deren entsprechenden Anschluss an dem Entlüftungs-Magnetventil 22b.

Die Entlüftung der ersten Steuerleitung 41a hingegen erfolgt zwar ebenfalls über das Entlüftungs-Magnetventil 22b, jedoch wird der entsprechend dafür vorgesehene Entlüftungspfad durch: das zweite Steuer-Magnetventil 22a, die Bypasssteuerleitung 41c, die zweite Rückkopplungsleitung 51b sowie die erste Steuerleitung 41a ausgebildet.

Anhand des abnehmenden Drucks in den Steuereingängen 45a; 45b, wird die jeweilige pneumatische Verbindung zwischen den Eingängen 43a; 43b und den Ausgängen 44a; 44b des Anhängersteuer- und Zugfahrzeugsteuer-Relaisventils 40a; 40b getrennt.

Die Entlüftungsausgänge 46a; 46b des Anhängersteuer- und Zugfahrzeugsteuer-Relaisventils 40a, 40b werden wieder geöffnet.

Der Betriebsdruck aus der zweiten Rückkopplungsleitung 51b in Verbindung mit der Zugfahrzeugsteuer-Ausgangsleitung 80b und dem Federspeicherbremszylinderausgang 72 wird sodann über den Entlüftungsausgang 46b des Zugfahrzeugsteuer-Relaisventils 40b zusätzlich entlüftet.

Aufgrund der kontinuierlich vorliegenden Rückkopplung über die zweite Rückkopplungsleitung 51b mit der zweiten Drosseleinheit 52b, findet weiterhin eine Entlüftung der Zugfahrzeugsteuer-Ausgangsleitung 80b und des Federspeicherbremszylinderausgangs 72 über das offen geschaltete Entlüftungs-Magnetventil 22b statt.

Darüber hinaus wird der Betriebsdruck aus der ersten Rückkopplungsleitung 51a in Verbindung mit der Anhängersteuer-Ausgangsleitung 80a und dem Anhänger-Steuerausgang 71 über den Entlüftungsausgang 46a des Anhängersteuer-Relaisventils 40a zusätzlich entlüftet.

Aufgrund der kontinuierlich vorliegenden Rückkopplung über die erste Rückkopplungsleitung 51a und über den vorstehend beschriebenen Entlüftungspfad findet zumindest teilweise eine Entlüftung der Anhängersteuer-Ausgangsleitung 80a und des Anhänger-Steuerausgangs 71 über das offen geschaltete Entlüftungsventil 22b statt.

Sobald der Federspeicherbremszylinderausgang 72 und der Anhänger-Steuerausgang 71 hinreichend entlüftet sind, werden das zweite Steuer-Magnetventil 22a und das Entlüftungs-Magnetventil 22b geschlossen geschaltet, so dass der erste Parkzustand nun vorliegt.

Somit ist ein erster Parkzustand gemäß Fig. 1 mit dem entlüfteten Federspeicherbremszylinderausgang 72 und dem entlüfteten Anhänger-Steuerausgang 71 erreicht.

Die Parkbremse des Zugfahrzeugs sowie des Anhängers sind aktiviert und bringen eine entsprechende Bremswirkung auf.

Um von einem **Fahrzustand** entsprechend in den **zweiten Parkzustand** zu gelangen, wird ausgehend von dem Fahrzustand lediglich das Entlüftungs-Magnetventil 22b offen bzw. durchlässig geschaltet, so dass Druckluft über den Entlüftungsausgang 23b austreten kann.

Die Entlüftung der Zugfahrzeugsteuer-Ausgangsleitung 80b und des Federspeicherbremszylinderausgangs 72 erfolgt somit vergleichbar zu deren entsprechender Entlüftung gemäß dem vorstehend beschriebenen Wechsel von einem Fahrzustand in einen ersten Parkzustand.

Um von einem Fahrzustand in den zweiten Parkzustand zu gelangen verbleibt das zweite Steuer-Magnetventli 22a in seiner gesperrten Stellung, so dass bei entlüfteter Zugfahrzeugsteuer-Ausgangsleitung 80b die Anhängersteuer-Ausgangsleitung 80a, wie vorstehend bereits im Zusammenhang mit dem zweiten Parkzustand beschreiben, dennoch in einem belüfteten Zustand verbleibt.

Die Überführung der erfindungsgemäßen Parkbremseinrichtung 1 von dem Fahrzustand in den ersten oder zweiten Parkzustand kann im Übrigen automatisch in Abhängigkeit des Ladungszustandes des Nutzfahrzeugs erfolgen.

Die Erfassung des Ladungszustands bzw. des Beladungszustands des Nutzfahrzeugs bzw. vorzugsweise des Anhängers erfolgt über einen oder mehrere Beladungssensoren.

Vorzugsweise sind die Beladungssensoren dazu eingerichtet und ausgebildet, den Beladungszustand des Anhängers, z.B. in Form eines Beladungsgewichts, Beladungsvolumens sowie deren jeweilige Verteilung innerhalb des Anhängers, zu erfassen.

Eine pneumatische Verschaltung der Parkbremseinrichtung 1 gemäß dem zweiten Parkzustand entspricht im Übrigen auch einem sogenannten Trailer-Test-Zustand der Parkbremseinrichtung 1.

Eine derartige Verschaltung der Parkbremseinrichtung 1 erfolgt unabhängig des Beladungszustandes des Anhängers in Antwort auf einen entsprechenden Trailer-Test-Befehl eines Fahrzeugführers.

Des Weiteren kann aus dem Fahrzustand heraus ein **abgestufter Bremszustand** herbeigeführt werden.

Die Steuer-Magnetventile 21a; 21b; 22a und das Entlüftungs-Magnetventil 22b sind vorzugsweise teilweise offen bzw. durchlässig geschaltet, insbesondere durch mehrere kurze, aufeinanderfolgende gepulste Betätigungen.

Somit wird die erste und zweite Steuerleitung 41a; 41b belüftet oder entlüftet.

Die Steuereingänge 45a; 45a des Anhängersteuer- und Zugfahrzeugsteuer-Relaisventils 40a; 40b werden mit einem spezifischen Steuerdruck belüftet, der zwischen 0 bar und dem maximalen Systemdruck liegt.

Der spezifische Steuerdruck ist in Abhängigkeit von dem Öffnungsgrad der Steuer-Magnetventile 21a; 21b; 22a und des Entlüftungs-Magnetventils 22b einstellbar.

Anhand des spezifischen Drucks an den Steuereingängen 45a; 45b werden vorzugsweise proportionale Drücke an den Ausgängen 44a; 44b des Anhängersteuer- und Zugfahrzeugsteuer-Relaisventils 40a; 40b bereitgestellt.

Der Federspeicherbremszylinderausgang 72 und der Anhänger-Steuerausgang 71 werden derart entlüftet, dass eine teilweise Bremswirkung des Zugfahrzeugs und des Anhängers aufgebracht wird.

Wie vorstehend (im Zusammenhang mit dem Wechsel von einem Fahrzustand entsprechend in den ersten Parkzustand) beschrieben, erfolgt ferner eine gestufte Entlüftung der Anhängersteuer-Ausgangsleitung 80a und der Zugfahrzeugsteuer-Ausgangsleitung 80b gemeinsam über das Entlüftungs-Magnetventil 22b und den entsprechend beschriebenen Entlüftungspfad.

Es ist ein abgestufter Bremszustand mit einer teilweisen Bremswirkung des Kraftfahrzeugs bereitstellbar.

In diesem Sinne können an den Ausgängen 44a; 44b des Anhängersteuer- und Zugfahrzeugsteuer-Relaisventils 40a; 40b konstante Drücke über einen spezifischen Zeitraum gehalten und stufenweise verändert werden.

Indem der Federspeicherbremszylinderausgang 72 und der Anhänger-Steuerausgang 71 mit zeitweise konstanten, stufenweise veränderten Drücken belüftet werden, ist die Bremswirkung des Zugfahrzeugs und des Anhängers stufenweise variierbar.

Darüber hinaus ist es auch möglich einen **Streckbrems-Zustand** mit dem Ausführungsbeispiel im Sinne der Fig. 1 umzusetzen, insbesondere aus einem Fahrzustand heraus.

Das Umschalten in den Betriebszustand für die Streckbrems-Funktion orientiert sich im Wesentlichen an den vorstehend beschrieben Schaltvorgängen.

Vorzugsweise ist der Federspeicherbremszylinderausgang 72 des Zugfahrzeugs in dem Streckbrems-Zustand belüftet.

Der Anhänger-Steuerausgang 71 ist bedarfsweise entlüftbar bzw. belüftbar, insbesondere anhand des Zugfahrzeugsteuer-Relaisventils 40b in Verbindung mit der ersten Steuer-Magnetventileinheit 20a.

So kann der Anhänger-Steuerausgang 71 zweckmäßig, insbesondere abstufbar, mit Druckluft belüftet oder entlüftet werden.

Es ist somit eine abstufbare Bremswirkung des Anhängers verfügbar, um das Kraftfahrzeug während dem Fahrzustand zu strecken und auf diese Weise zu stabilisieren.

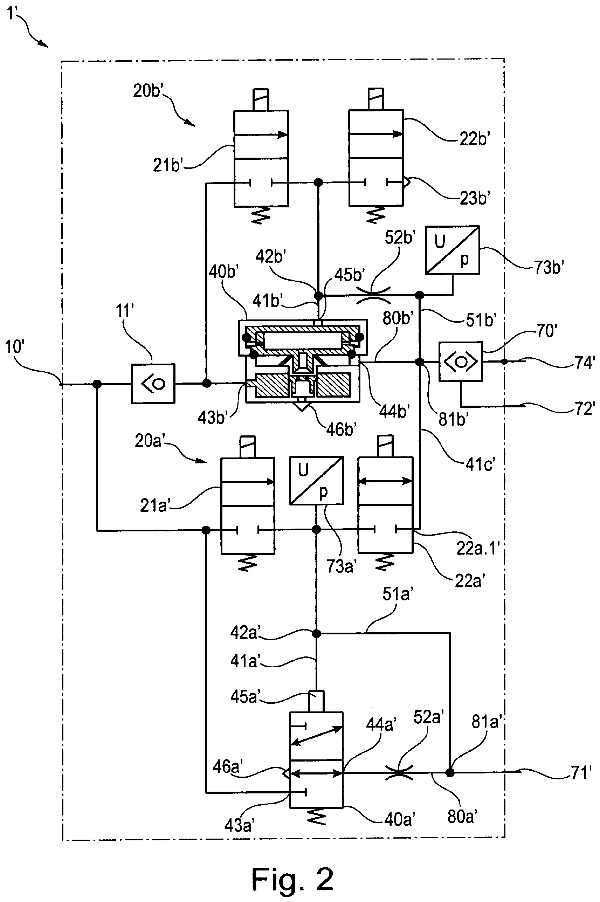

Das in Fig. 2 dargestellte zweite Ausführungsbeispiel der erfindungsgemäßen Parkbremseinrichtung 1' weist im Wesentlichen dieselben strukturellen und funktionalen Merkmale wie das gemäß Fig. 1 beschriebene erste Ausführungsbeispiel der erfindungsgemäßen Parkbremseinrichtung 1 auf.

Lediglich die nachfolgenden insbesondere strukturellen Merkmalsunterschiede sollen aufgezeigt werden:
Statt des Anhängersteuer-Relaisventils 40a weist das zweite Ausführungsbeispiel der erfindungsgemäßen Parkbremseinrichtung 1' ein bistabiles, pneumatisch ansteuerbares und rückkoppelbares 3/2-Wege-Ventil 40a' zur Steuerung und/oder Regelung der ersten Anhängersteuer-Ausgangsleitung 80a auf.

### BEZUGSZEICHENLISTE

- 1: Parkbremseinrichtung
- 10: Druckluftanschluss
- 11: Rückschlagventil
- 20a: erste Steuer-Magnetventileinheit
- 20b: zweite Steuer-Magnetventileinheit
- 21a: erstes Steuer-Magnetventil
- 21b: drittes Steuer-Magnetventil
- 22a: zweites Steuer-Magnetventil
- 22a.1: Bypasssteueranschluss
- 22b: Entlüftungs-Magnetventil
- 23b: Entlüftungsausgang
- 40a: Anhängersteuer-Relaisventil
- 40b: Zugfahrzeugsteuer-Relaisventil
- 41a: erste Steuerleitung
- 41b: zweite Steuerleitung
- 41c: Bypasssteuerleitung
- 42a: erste Steuer-Abzweigung
- 42b: zweite Steuer-Abzweigung
- 43a: Eingang des Anhängersteuer-Relaisventils
- 43b: Eingang des Zugfahrzeugsteuer-Relaisventils
- 44a: Ausgang des Anhängersteuer-Relaisventils
- 44b: Ausgang des Zugfahrzeugsteuer-Relaisventils
- 45a: Steuereingang des Anhängersteuer-Relaisventils
- 45b: Steuereingang des Zugfahrzeugsteuer-Relaisventils
- 46a: Entlüftungsausgang des Anhängersteuer-Relaisventils
- 46b: Entlüftungsausgang des Zugfahrzeugsteuer-Relaisventils
- 51a: erste Rückkopplungsleitung
- 51b: zweite Rückkopplungsleitung
- 52a: erste Drosseleinheit
- 52b: zweite Drosseleinheit
- 70: Select-High-Ventil
- 71: Anhänger-Steuerausgang
- 72: Federspeicherbremszylinderausgang
- 73a: erster Drucksensor
- 73b: zweiter Drucksensor
- 74: Betriebsbremsenausgang
- 80a: Anhängersteuer-Ausgangsleitung
- 80b: Zugfahrzeugsteuer-Ausgangsleitung
- 81a: Anhänger-Ausgangs-Abzweigung
- 81b: Zugfahrzeug-Ausgangs-Abzweigung

- 1': Parkbremseinrichtung
- 10': Druckluftanschluss
- 11': Rückschlagventil
- 20a': erste Steuer-Magnetventileinheit
- 20b': zweite Steuer-Magnetventileinheit
- 21a': erstes Steuer-Magnetventil
- 21b': drittes Steuer-Magnetventil
- 22a': zweites Steuer-Magnetventil
- 22a.1': Bypasssteueranschluss
- 22b': Entlüftungs-Magnetventil
- 23b': Entlüftungsausgang
- 40a': bistabiles 3/2-Wege-Ventil
- 40b': Zugfahrzeugsteuer-Relaisventil
- 41a': erste Steuerleitung
- 41b': zweite Steuerleitung
- 41c': Bypasssteuerleitung
- 42a': erste Steuer-Abzweigung
- 42b': zweite Steuer-Abzweigung
- 43a': Eingang des bistabilen 312-Wege-Ventils
- 43b': Eingang des Zugfahrzeugsteuer-Relaisventils
- 44a': Ausgang des bistabilen 312-Wege-Ventils
- 44b': Ausgang des Zugfahrzeugsteuer-Relaisventils
- 45a': Steuereingang des bistabilen 312-Wege-Ventils
- 45b': Steuereingang des Zugfahrzeugsteuer-Relaisventils
- 46a': Entlüftungsausgang des bistabilen 3/2-Wege-Ventils
- 46b': Entlüftungsausgang des Zugfahrzeugsteuer-Relaisventils
- 51a': erste Rückkopplungsleitung
- 51b': zweite Rückkopplungsleitung
- 52a': erste Drosseleinheit
- 52b': zweite Drosseleinheit
- 70': Select-High-Ventil
- 71': Anhänger-Steuerausgang
- 72': Federspeicherbremszylinderausgang
- 73a': erster Drucksensor
- 73b': zweiter Drucksensor
- 74': Betriebsbremsenausgang
- 80a': Anhängersteuer-Ausgangsleitung
- 80b': Zugfahrzeugsteuer-Ausgangsleitung
- 81a': Anhänger-Ausgangs-Abzweigung
- 81b': Zugfahrzeug-Ausgangs-Abzweigung

## Patentansprüche

1. Parkbremseinrichtung (1, 1') für ein Kraftfahrzeug, insbesondere ein Nutzfahrzeug, mit wenigstens einen Druckluftanschluss (10), mit wenigstens einer ersten Steuer-Magnetventileinheit (20a), mit wenigstens einem Anhängersteuer-Bistabilventil (40a, 40a') und mit wenigstens einem ersten Druckluftausgang (71), wobei der Druckluftanschluss (10) mit der ersten Steuer-Magnetventileinheit (20a) und dem Anhängersteuer-Bistabilventil (40a, 40a') verbindbar ist, wobei die erste Steuer-Magnetventileinheit (20a) mit dem Anhängersteuer-Bistabilventil (40a, 40a') über wenigstens eine erste Steuerleitung (41a) verbindbar ist, und wobei das Anhängersteuer-Bistabilventil (40a, 40a') über wenigstens eine Anhängersteuer-Ausgangsleitung (80a) mit dem ersten Druckluftausgang (71) verbindbar ist, wobei Parkbremseinrichtung (1, 1') wenigstens ein Zugfahrzeugsteuer-Bistabilventil (40b) und wenigstens einen zweiten Druckluftausgang (72, 74) aufweist, wobei der Druckluftanschluss (10) mit dem Zugfahrzeugsteuer-Bistabilventil (40b) verbindbar ist und wobei das Zugfahrzeugsteuer-Bistabilventil (40b) über wenigstens eine Zugfahrzeugsteuer-Ausgangsleitung (80b) mit dem zweiten Druckluftausgang (72, 74) verbindbar ist, **dadurch gekennzeichnet, dass** in der Zugfahrzeugsteuer-Ausgangsleitung (80b) zwischen dem Zugfahrzeugsteuer-Bistabilventil (40b) und dem zweiten Druckluftausgang (72, 74) wenigstens eine Zugfahrzeug-Ausgangs-Abzweigung (81b) angeordnet ist und wobei die erste Steuer-Magnetventileinheit (20a) über wenigstens eine Bypasssteuerleitung (41c) sowie über die Zugfahrzeug-Ausgangs-Abzweigung (81b) mit der Zugfahrzeugsteuer-Ausgangsleitung (80b) verbindbar ist.

2. Parkbremseinrichtung (1, 1') nach Anspruch 1,
**dadurch gekennzeichnet, dass**
in der ersten Steuerleitung (41a) zwischen dem Anhängersteuer-Bistabilventil (40a, 40a') und der ersten Steuer-Magnetventileinheit (20a) wenigstens eine erste Steuer-Abzweigung (42a) angeordnet ist und in der Anhängersteuer-Ausgangsleitung (80a) zwischen dem Anhängersteuer-Bistabilventil (40a) und dem ersten Druckluftausgang (71) wenigstens eine Anhänger-Ausgangs-Abzweigung (81a) angeordnet ist, wobei die erste Steuerleitung (41a) an der ersten Steuer-Abzweigung (42a) über wenigstens eine erste Rückkopplungsleitung (51a) an der Anhänger-Ausgangs-Abzweigung (81a) mit der Anhängersteuer-Ausgangsleitung (80a) verbunden ist.

3. Parkbremseinrichtung (1, 1') nach Anspruch 2,
**dadurch gekennzeichnet, dass**
in der Anhängersteuer-Ausgangsleitung (80a) wenigstens eine erste Drosseleinheit (52a) angeordnet ist, insbesondere wobei die erste Drosseleinheit (52a) zwischen dem Anhängersteuer-Bistabilventil (40a, 40a') und der Anhänger-Ausgangs-Abzweigung (81a) anordenbar ist und/oder wobei die erste Drosseleinheit (52a) in der ersten Rückkopplungsleitung (51a) anordenbar ist.

4. Parkbremseinrichtung (1, 1') nach einem der vorhergehenden Ansprüche,
**dadurch gekennzeichnet, dass**
die erste Steuer-Magnetventileinheit (20a) wenigstens ein erstes Steuer-Magnetventil (21a) und wenigstens ein zweites Steuer-Magnetventil (22a) aufweist, insbesondere wobei in einer Verbindungsleitung zwischen erstem und zweitem Steuer-Magnetventil (21a, 22a) wenigstens ein Drucksensor 73a angeordnet ist.

5. Parkbremseinrichtung (1, 1') nach Anspruch 4,
**dadurch gekennzeichnet, dass**
die erste Steuer-Magnetventileinheit (20a) derart ausgestaltet ist, dass zwischen dem Druckluftanschluss (10) und der ersten Steuerleitung (41a) das erste Steuer-Magnetventil (21a) und zwischen der ersten Steuerleitung (41a) und der Bypasssteuerleitung (41c) das zweite Steuer-Magnetventil (22a) angeordnet ist.

6. Parkbremseinrichtung (1, 1') nach einem der Ansprüche 2 bis 5,
**dadurch gekennzeichnet, dass**
die erste Rückkopplungsleitung (51a) in Verbindung mit der ersten Steuer-Abzweigung (42a) und der Anhänger-Ausgangs-Abzweigung (81a) eine Rückkopplungsverbindung zwischen einem ersten Steuereingang (45a) und einem ersten Ausgang (44a) des Anhängersteuer-Bistabilventils (40a, 40a') ausbildet.

7. Parkbremseinrichtung (1, 1') nach einem der vorhergehenden Ansprüche,
**dadurch gekennzeichnet, dass**
die Parkbremseinrichtung (1, 1') wenigstens eine zweite Steuer-Magnetventileinheit (20b) aufweist, die mit dem Druckluftanschluss (10) und dem Zugfahrzeugsteuer-Bistabilventil (40b) verbindbar ist, wobei die zweite Steuer-Magnetventileinheit (20b) mit dem Zugfahrzeugsteuer-Bistabilventil (40b) über wenigstens eine zweite Steuerleitung (41b) verbindbar ist.

8. Parkbremseinrichtung (1, 1') nach Anspruch 7,
**dadurch gekennzeichnet, dass**
in der zweiten Steuerleitung (41b) zwischen dem Zugfahrzeugsteuer-Bistabilventil (40b) und der zweiten Steuer-Magnetventileinheit (20b) wenigstens eine zweite Steuer-Abzweigung (42b) angeordnet ist, wobei die zweite Steuerleitung (41b) an der zweiten Steuer-Abzweigung (42b) über wenigstens eine zweite Rückkopplungsleitung (51b) an der Zugfahrzeug-Ausgangs-Abzweigung (81b) mit der Zugfahrzeugsteuer-Ausgangsleitung (80b) verbunden ist.

9. Parkbremseinrichtung (1, 1') nach Anspruch 7 oder Anspruch 8,
**dadurch gekennzeichnet, dass**
die Parkbremseinrichtung (1, 1') wenigstens eine zweite Drosseleinheit (52b) aufweist, die in der zweiten Rückkopplungsleitung (51b), insbesondere zwischen der Zugfahrzeug-Ausgangs-Abzweigung (81b) der Zugfahrzeugsteuer-Ausgangsleitung (80b) und der zweiten Steuer-Abzweigung (42b) der zweiten Steuerleitung (41a), angeordnet ist.

10. Parkbremseinrichtung (1, 1') nach einem der Ansprüche 7 bis 9,
**dadurch gekennzeichnet, dass**
die zweite Steuer-Magnetventileinheit (20b) wenigstens ein drittes Steuer-Magnetventil (21b) und wenigstens ein Entlüftungs-Magnetventil (22b) mit wenigstens einem Entlüftungsausgang (23b) aufweist.

11. Parkbremseinrichtung (1, 1') nach Anspruch 10,
**dadurch gekennzeichnet, dass**
die zweite Steuer-Magnetventileinheit (20b) derart ausgestaltet ist, dass zwischen dem Druckluftanschluss (10) und der zweiten Steuerleitung (41b) das dritte Steuer-Magnetventil (21b) und zwischen der zweiten Steuerleitung (41b) und dem Entlüftungsausgang (23b) das Entlüftungs-Magnetventil (22b) angeordnet ist.

12. Parkbremseinrichtung (1, 1') nach einem der Ansprüche 8 bis 11,
**dadurch gekennzeichnet, dass**
die zweite Rückkopplungsleitung (51b) in Verbindung mit der zweiten Steuer-Abzweigung (42b) und der Zugfahrzeug-Ausgangs-Abzweigung (81b) über die zweite Drosseleinheit (52b) eine Rückkopplungsverbindung zwischen einem Steuereingang (45b) und einem Ausgang (44b) des Zugfahrzeugsteuer-Bistabilventils (40b) ausbildet.

13. Parkbremseinrichtung (1, 1') nach einem der vorhergehenden Ansprüche,
**dadurch gekennzeichnet, dass**
das Zugfahrzeugsteuer-Bistabilventil (40b, 40b') als Zugfahrzeugsteuer-Reiaisventil (40b, 40b') ausgebildet ist und/oder das Anhängersteuer-Bistabilventil (40a) als Anhängersteuer-Relaisventil (40a) oder als pneumatisch ansteuerbares 3/2-WegeVentil (40c) ausgebildet ist.

## Claims

1. Parking brake device (1, 1') for a motor vehicle, in particular a commercial vehicle, having at least one compressed air port(10), having at least one first control solenoid valve unit (20a), having at least one trailer control bistable valve (40a, 40a') and having at least one first compressed air outlet (71), wherein the compressed air port (10) can be connected to the first control solenoid valve unit (20a) and to the trailer control bistable valve (40a, 40a'), wherein the first control solenoid valve unit (20a) can be connected to the trailer control bistable valve (40a, 40a') via at least one first control line (41a), and wherein the trailer control bistable valve (40a, 40a') can be connected to the first compressed air outlet (71) via at least one trailer control outlet line (80a), wherein the parking brake device (1, 1') has at least one tractor vehicle control bistable valve (40b) and at least one second compressed air outlet (72, 74), wherein the compressed air port(10) can be connected to the tractor vehicle control bistable valve (40b), and wherein the tractor vehicle control bistable valve (40b) can be connected to the second compressed air outlet (72, 74) via at least one tractor vehicle control outlet line (80b), **characterised in that** at least one tractor vehicle outlet branch (81b) is arranged in the tractor vehicle control outlet line (80b), between the tractor vehicle control bistable valve (40b) and the second compressed air outlet (72, 74), and **in that** the first control solenoid valve unit (20a) can be connected to the tractor vehicle control outlet line (80b) via at least one bypass control line (41c) and via the tractor vehicle outlet branch (81b).

2. Parking brake device (1, 1') according to claim 1,
**characterised in that**
at least one first control branch (42a) is arranged in the first control line (41a), between the trailer control bistable valve (40a, 40a') and the first control solenoid valve unit (20a), and at least one trailer outlet branch (81a) is arranged in the trailer control outlet line (80a), between the trailer control bistable valve (40a) and the first compressed air outlet (71), wherein the first control line (41a) is connected to the trailer control outlet line (80a) at the first control branch (42a) via at least one first feedback line (51a) at the trailer outlet branch (81a).

3. Parking brake device (1, 1') according to claim 2,
**characterised in that**
at least one at least one first throttle unit (52a) is arranged in the trailer control outlet line (80a), in particular wherein the first throttle unit (52a) can be arranged between the trailer control bistable valve (40a, 40a') and the trailer outlet branch (81a), and/or wherein the first throttle unit (52a) can be arranged in the first feedback line (51a).

4. Parking brake device (1, 1') according to any of the preceding claims,
**characterised in that**
the first control solenoid valve unit (20a) has at least one first control solenoid valve (21a) and at least one second control solenoid valve (22a), in particular wherein at least one pressure sensor (73a) is arranged in a connecting line between the first and second control solenoid valves (21a, 22a).

5. Parking brake device (1, 1') according to claim 4,
**characterised in that**
the first control solenoid valve unit (20a) is configured in such a way that the first control solenoid valve (21a) is arranged between the compressed air port(10) and the first control line (41a), and the second control solenoid valve (22a) is arranged between the first control line (41a) and the bypass control line (41c).

6. Parking brake device (1, 1') according to any of claims 2 to 5,
**characterised in that**
the first feedback line (51a) forms, in conjunction with the first control branch (42a) and the trailer outlet branch (81a), a feedback connection between a first control inlet (45a) and a first outlet (44a) of the trailer control bistable valve (40a, 40a').

7. Parking brake device (1, 1') according to any of the preceding claims,
**characterised in that**
the parking brake device (1, 1') has at least one second control solenoid valve unit (20b) which can be connected to the compressed air port (10) and to the tractor vehicle control bistable valve (40b), wherein the second control solenoid valve unit (20b) can be connected to the tractor vehicle control bistable valve (40b) via at least one second control line (41b).

8. Parking brake device (1, 1') according to claim 7,
**characterised in that**
at least one second control branch (42b) is arranged in the second control line (41b), between the tractor vehicle control bistable valve (40b) and the second control solenoid valve unit (20b), wherein the second control line (41) is connected to the tractor vehicle control outlet line (80b) at the second control branch (42b), via at least one second feedback line (51b) at the tractor vehicle outlet branch (81b).

9. Parking brake device (1, 1') according to claim 7 or 8,
**characterised in that**
the parking brake device (1, 1') has at least one second throttle unit (52b) which is arranged in the second feedback line (51b), in particular between the tractor vehicle outlet branch (81b) of the tractor vehicle control outlet line (80b) and the second control branch (42b) of the second control line (41a).

10. Parking brake device (1, 1') according to any of claims 7 to 9,
**characterised in that**
the second control solenoid valve unit (20b) has at least one third control solenoid valve (21b) and at least one venting solenoid valve (22b) with at least one venting outlet (23b).

11. Parking brake device (1, 1') according to claim 10,
**characterised in that**
the second control solenoid valve unit (20b) is configured in such a way that the third control solenoid valve (21b) is arranged between the compressed air port (10) and the second control line (41b), and the venting solenoid valve (22b) is arranged between the second control line (41b) and the venting outlet (23b).

12. Parking brake device (1, 1') according to any of claims 1 to 11,
**characterised in that**
the second feedback line (51b) forms, in conjunction with the second control branch (42b) and the tractor vehicle outlet branch (81b), a feedback connection, via the second throttle unit (52b), between a control inlet (45b) and an outlet (44b) of the tractor vehicle control bistable valve (40b).

13. Parking brake device (1, 1') according to any of the preceding claims,
**characterised in that**
the tractor vehicle control bistable valve (40b, 40b') is embodied as a tractor vehicle control relay valve (40b, 40b'), and/or the trailer control bistable valve (40a) is embodied as a trailer control relay valve (40a) or as a 3/2-way valve (40c) which can be actuated pneumatically.

## Revendications

1. Dispositif (1, 1') de frein de stationnement d'un véhicule automobile, notamment d'un véhicule utilitaire, comprenant au moins un raccord (10) pour de l'air comprimé, comprenant au moins une première unité (20a) d'électrovanne de commande, comprenant au moins une vanne (40a, 40a') bistable de commande de remorque et comprenant au moins une première sortie (71) d'air comprimé, dans lequel le raccord (10) pour de l'air comprimé peut communiquer avec la première unité (20a) d'électrovanne de commande et avec la vanne (40a, 40a') bistable de commande de remorque, dans lequel la première unité (20a) d'électrovanne de commande peut communiquer avec la vanne (40a, 40a') bistable de commande de remorque par au moins un premier conduit (41a) de commande et dans lequel la vanne (40a, 40a') bistable de commande de remorque peut communiquer avec la première sortie (71) d'air comprimé par au moins un conduit (80a) de sortie de commande de remorque, dans lequel le dispositif (1, 1') de frein de stationnement a au moins une vanne (40b) bistable de commande de véhicule tracteur et au moins une deuxième sortie (72, 74) d'air comprimé, dans lequel le raccord (10) pour l'air comprimé peut communiquer avec la vanne (40b) bistable de commande de véhicule tracteur et dans lequel la vanne (40b) bistable de commande de véhicule tracteur peut communiquer avec la deuxième sortie (72, 74) par au moins un conduit (80b) de sortie de commande de véhicule tracteur, **caractérisé en ce que**
au moins une dérivation (81b) de sortie de véhicule tracteur est disposée dans le conduit (80b) de sortie de commande de véhicule tracteur entre la vanne (40b) bistable de commande de véhicule tracteur et la deuxième sortie (72, 74) d'air comprimé et dans lequel la première unité (20a) d'électrovanne de commande peut communiquer avec le conduit (80b) de sortie de commande de véhicule tracteur par au moins un conduit (41c) de commande de dérivation ainsi que par la dérivation (81b) de sortie de véhicule tracteur.

2. Dispositif (1, 1') de frein de stationnement suivant la revendication 1,
**caractérisé en ce que**
au moins une première dérivation (42a) de commande est disposée dans le premier conduit (41a) de commande entre la vanne (40a, 40a') bistable de commande de remorque et la première unité (20a) d'électrovanne de commande et au moins une dérivation (81a) de sortie de remorque est disposée dans le conduit (80a) de sortie de commande de remorque entre la vanne (40a) bistable de commande de remorque et la première sortie (71) d'air comprimé, dans lequel le premier conduit (41a) de commande sur la première dérivation (42a) de commande communique avec le conduit (80a) de sortie de commande de remorque par au moins un premier conduit (51a) de retour sur la dérivation (81a) de sortie de remorque.

3. Dispositif (1, 1') de frein de stationnement suivant la revendication 2,
**caractérisé en ce que**
au moins une première unité (52a) d'étranglement est montée dans le conduit (80a) de sortie de commande de remorque, dans lequel notamment la première unité (52a) d'étranglement peut être montée entre la vanne (40a, 40a') bistable de commande de remorque et la dérivation (81a) de sortie et/ou dans lequel la première unité (52a) d'étranglement peut être montée dans le premier conduit (51a) de retour .

4. Dispositif (1, 1') de frein de stationnement suivant l'une des revendications précédentes,
**caractérisé en ce que**
la première unité (20a) d'électrovanne de commande a au moins une première électrovanne (21a) de commande et au moins une deuxième électrovanne (22a) de commande, dans lequel notamment au moins un capteur (73a) de pression est monté dans le conduit de communication entre la première et la deuxième électrovanne (21a, 22a) de commande.

5. Dispositif (1, 1') de frein de stationnement suivant la revendication 4,
**caractérisé en ce que**
la première unité (20a) d'électrovanne de commande est conformée de manière à ce que la première électrovanne (21a) de commande soit montée entre le raccord (10) pour de l'air comprimé et le premier conduit (41a) de commande et de manière à ce que la deuxième électrovanne (22a) de commande soit montée entre le premier conduit (41a) de commande et le conduit (41c) de dérivation.

6. Dispositif (1, 1') de frein de stationnement suivant l'une des revendications 2 à 5,
**caractérisé en ce que**
le premier conduit (51a) de retour constitue en liaison avec la première dérivation (42a) de commande et la dérivation (81a) de sortie de remorque, une communication de retour entre une première entrée (45a) de commande et une première sortie (44a) de la vanne (40a, 40a') bistable de commande de remorque.

7. Dispositif (1, 1') de frein de stationnement suivant l'une des revendications précédentes,
**caractérisé en ce que**
le dispositif (1, 1') de frein de stationnement a au moins une deuxième unité (20b) d'électrovanne de commande, qui peut communiquer avec le raccord (10) pour de l'air comprimé et avec la vanne (40b) bistable de commande de véhicule tracteur, dans lequel la deuxième unité (20b) d'électrovanne de commande peut communiquer avec la vanne (40b) bistable de commande de véhicule tracteur par au moins un deuxième conduit (41b) de commande.

8. Dispositif (1, 1') de frein de stationnement suivant la revendication 7,
**caractérisé en ce que**
au moins une deuxième dérivation (42b) de commande est disposée dans le deuxième conduit (41b) de commande entre la vanne (40b) bistable de commande de véhicule tracteur et la deuxième unité (20b) d'électrovanne de commande, dans lequel le deuxième conduit (41b) de commande sur la deuxième dérivation (42b) de commande communique avec le conduit (80b) de sortie de commande de véhicule tracteur par au moins un deuxième conduit (51b) de retour sur la dérivation (81b) de sortie de véhicule tracteur.

9. Dispositif (1, 1') de frein de stationnement suivant la revendication 7 ou la revendication 8,
**caractérisé en ce que**
le dispositif (1, 1') de frein de stationnement a au moins une deuxième unité (52b) d'étranglement, qui est montée dans le deuxième conduit (51b) de retour, notamment entre la dérivation (81b) de sortie de véhicule tracteur du conduit (80b) de sortie de commande de véhicule tracteur et la deuxième dérivation (42b) de commande du deuxième conduit (41a) de commande.

10. Dispositif (1, 1') de frein de stationnement suivant l'une des revendications 7 à 9,
**caractérisé en ce que**
la deuxième unité (20b) d'électrovanne de commande a au moins une troisième électrovanne (21b) de commande et au moins une électrovanne (22b) de mise à l'atmosphère ayant au moins une sortie (23b) de mise à l'atmosphère.

11. Dispositif (1, 1') de frein de stationnement suivant la revendication 10,
**caractérisé en ce que**
la deuxième unité (20b) d'électrovanne de commande est conformée de manière à ce que la troisième électrovanne (21b) de commande soit montée entre le raccord (10) pour de l'air comprimé et le deuxième conduit (41b) de commande et de manière à ce que l'électrovanne (22b) de mise à l'atmosphère soit montée entre le deuxième conduit (41b) de commande et la sortie (23b) de mise à l'atmosphère.

12. Dispositif (1, 1') de frein de stationnement suivant l'une des revendications 8 à 11,
**caractérisé en ce que**
le deuxième conduit (51b) de retour constitue, en liaison avec la deuxième dérivation (42b) de commande et la dérivation (81b) de sortie de véhicule tracteur, par l'intermédiaire de la deuxième unité (52b) d'étranglement, une communication de retour entre une entrée (45b) de commande et une sortie (44b) de la vanne (40b) bistable de commande de véhicule tracteur.

13. Dispositif (1, 1') de frein de stationnement suivant l'une des revendications précédentes,
**caractérisé en ce que**
la vanne (40b, 40b') bistable de commande de véhicule tracteur est constituée sous la forme d'une vanne (40b, 40b') relais de commande de véhicule tracteur et/ou la vanne (40a) bistable de commande de remorque est constituée sous la forme d'une vanne (40a) relais de commande de remorque ou sous la forme d'une vanne (40c) à 3/2 voies pouvant être commandées pneumatiquement.
